# EUROPEAN PATENT APPLICATION

(11) **EP 4 152 824 A1**
(43) Date of publication of application: **22.03.2023**
(21) Application number: 21804407.1
(22) Date of filing: 30.04.2021
(51) Int. Cl.: H04W 36/24, H04B 7/15, H04W 84/06

(54) **COMMUNICATION DEVICE, NON-GEOSTATIONARY SATELLITE, GROUND STATION, AND COMMUNICATION METHOD**

(30) Priority: 13.05.2020 JP 2020084664
(71) Applicant: Sony Group Corporation, Minato-Ku, Tokyo, 108-0075 (JP)
(72) Inventor: MATSUDA, Hiroki, Tokyo 108-0075 (JP)
(74) Representative: Witte, Weller & Partner Patentanwälte mbB
(86) International application number: PCT/JP2021/017200
(87) International publication number: WO 2021/230107

(57) **Abstract**

A communication device is a communication device that communicates with at least one of a plurality of ground stations via a non-geostationary satellite, and includes: an acquisition unit that acquires predetermined information necessary for switching a connection destination ground station in advance before switching processing; and a communication control unit that switches the connection destination ground station based on the predetermined information.

## Description

### Field

The present disclosure relates to a communication device, a non-geostationary satellite, a ground station, and a communication method.

### Background

In recent years, with increasing demands for communication performance such as wide area coverage and connection stability, studies on a non-terrestrial network (NTN) in which a wireless network is provided from a device floating in the air or space have been started. Examples of communication using a non-terrestrial network include communication between a terminal device and a ground station (for example, gateway) via a non-geostationary satellite station (for example, a geostationary earth orbiting satellite such as a low earth orbiting satellite or a medium earth orbiting satellite) or an aircraft station.

### Citation List

### Non Patent Literature

Non Patent Literature 1: R1-1913131, Thales, "Considerations on satellite beam management, control loops and feeder link switch over," 3GPP TSG RAN1 Meeting#99, Reno, USA, November, 2019.

### Summary

### Technical Problem

A non-geostationary satellite station or an aircraft station appears to move at a high speed in the sky as viewed from a terminal on the ground. Therefore, in communication via a non-geostationary satellite station or an aircraft station, ground stations are frequently switched by the satellite station or the aircraft station. In the case of communication via a non-geostationary satellite station or an aircraft station, high communication performance may not be achieved unless the ground station is smoothly switched.

Therefore, the present disclosure proposes a communication device, a non-geostationary satellite, a ground station, and a communication method capable of achieving high communication performance.

### Solution to Problem

In order to solve the above problem, a communication device according to one aspect of the present disclosure that connects to at least one of a plurality of ground stations via a non-geostationary satellite, the communication device includes: an acquisition unit that acquires predetermined information necessary for switching a connection destination ground station in advance before switching processing; and a communication control unit that switches the connection destination ground station based on the predetermined information.

### Brief Description of Drawings

FIG. 1 is a diagram illustrating a configuration example of a communication system according to an embodiment of the present disclosure.
FIG. 2 is a diagram illustrating an example of a wireless network provided by a communication system.
FIG. 3 is a diagram illustrating an outline of satellite communication provided by a communication system.
FIG. 4 is a diagram illustrating an example of a cell formed by a non-geostationary satellite.
FIG. 5 is a diagram illustrating a configuration example of a management device according to an embodiment of the present disclosure.
FIG. 6 is a diagram illustrating a configuration example of a ground station according to an embodiment of the present disclosure.
FIG. 7 is a diagram illustrating a configuration example of a satellite station according to an embodiment of the present disclosure.
FIG. 8 is a diagram illustrating a configuration example of a terminal device according to an embodiment of the present disclosure.
FIG. 9 is a diagram for explaining a problem at the time of ground station switching.
FIG. 10 is a diagram for explaining ground station switching by the handover procedure.
FIG. 11 is a diagram for explaining seamless ground station switching.
FIG. 12 is a flowchart illustrating an example of initial connection processing.
FIG. 13 is a diagram illustrating a contention-based random access procedure.
FIG. 14 is a diagram illustrating a non-contention-based random access procedure.
FIG. 15 is a diagram illustrating a 2-step random access procedure.
FIG. 16 is a sequence diagram illustrating an example of transmission/reception processing (Grant Based).
FIG. 17 is a sequence diagram illustrating an example of transmission/reception processing (Configured Grant).
FIG. 18 is an example of a case where another satellite station is involved in notification of necessary information.
FIG. 19 is a diagram illustrating Sequence Example 1 of switching processing.
FIG. 20 is a diagram illustrating Sequence Example 2 of the switching processing.
FIG. 21 is a diagram illustrating Sequence Example 3 of the switching processing.
FIG. 22 is a diagram illustrating Sequence Example 4 of the switching processing.

### Description of Embodiments

Hereinafter, embodiments of the present disclosure will be described in detail with reference to the drawings. In each of the following embodiments, the same parts are denoted by the same reference numerals, and redundant description will be omitted.

In addition, in the present specification and the drawings, a plurality of constituent elements having substantially the same functional configuration may be distinguished by attaching different numerals after the same reference numerals. For example, a plurality of configurations having substantially the same functional configuration is distinguished as terminal devices 40₁, 40₂, and 40₃ as necessary. However, in a case where it is not particularly necessary to distinguish each of a plurality of components having substantially the same functional configuration, only the same reference numeral is attached. For example, in a case where it is not necessary to particularly distinguish the terminal devices 40₁, 40₂, and 40₃, they are simply referred to as terminal devices 40.

The present disclosure will be described according to the following item order.
1. Introduction
2. Configuration of communication system
2-1. Overall configuration of communication system
2-2. Configuration of management device
2-3. Configuration of ground station
2-4. Configuration of satellite station
2-5. Configuration of terminal device
3. Switching of ground station
3-1. Problems in application of conventional handover
3-2. Problem of seamless switching
4. Basic Operation of communication system
4-1. Initial connection processing
4-2. Random access procedure
4-3. Transmission/reception processing (Grant Based)
4-4. Transmission/reception processing (Configured Grant)
5. Switching of ground station
5-1. Overview of processing
5-2. Example of necessary information
5-3. Notification means for necessary information
5-4. Switching notification
5-5. Processing of terminal device after switching notification
5-6. Notification means between satellite station and ground station
6. Sequence example
6-1. Sequence example 1
6-2. Sequence example 2
6-3. Sequence example 3
6-4. Sequence example 4
7. Modification
8. Conclusion

### <<1. Introduction>>

Radio access technology (RAT) such as long term evolution (LTE) and new radio (NR) has been studied in the 3rd generation partnership project (3GPP). LTE and NR are a type of cellular communication technology, and enable mobile communication of a terminal device by arranging a plurality of areas covered by a base station in a cell shape. At this time, a single base station may manage a plurality of cells.

Note that, in the following description, "LTE" includes LTE-A (LTE-Advanced), LTE-A Pro (LTE-Advanced Pro), and EUTRA (Evolved Universal Terrestrial Radio Access). In addition, the NR includes NRAT (New Radio Access Technology) and FEUTRA (Further EUTRA). Note that a single base station may manage a plurality of cells. In the following description, a cell corresponding to LTE is referred to as an LTE cell, and a cell corresponding to NR is referred to as an NR cell.

NR is a next-generation (fifth-generation) radio access technology (RAT) of LTE. The NR is a radio access technology that can support various use cases including enhanced mobile broadband (eMBB), massive machine type communications (mMTC), and ultra-reliable and low latency communications (URLLC). NR has been studied aiming at a technical framework corresponding to usage scenarios, requirement conditions, arrangement scenarios, and the like in these use cases.

Furthermore, in the NR, studies on a non-terrestrial network (NTN) have started due to an increase in demand for wide area coverage, connection stability, and the like. In a non-terrestrial network, a wireless network is scheduled to be provided to a terminal device via a base station other than a ground station such as a satellite station or an aircraft station. The base station other than the ground station is referred to as a non-ground station or a non-ground base station. A wireless network provided by a ground station is referred to as a terrestrial network (TN). Using the same radio access scheme for the terrestrial network and the non-terrestrial network, integrated operation of the terrestrial network and the non-terrestrial network becomes possible.

Note that a non-geostationary satellite (for example, a low earth orbiting satellite and a medium earth orbiting satellite) in a non-terrestrial network is moving at high speed in the sky, and there is a possibility that a ground station (for example, gateway) connected to the satellite is switched. When the ground station is switched, the propagation path between the terminal and the satellite is switched. Therefore, the terminal and the satellite need a means for efficiently switching the ground station.

Among the non-ground stations, wireless stations such as a medium earth orbiting satellite, a low earth orbiting satellite, and a high altitude platform station (HAPS) appear to move in the sky at a high speed as viewed from a terminal on the ground. In particular, since the low earth orbiting satellites are moving at high speed in the sky, the cells formed on the ground by the low earth orbiting satellites are also moving at high speed. Therefore, there is a possibility that switching of the ground station to which the satellite is connected frequently occurs. The terminal may also have to resynchronize the satellite and the ground station frequently. In this case, there is a possibility that communication via a satellite is not smoothly performed.

Therefore, in the present embodiment, this problem is solved by the following means.

For example, the communication system of the present embodiment is a bent-pipe (transparent)-type mobile satellite communication system in which a terminal device communicates with a ground station via a non-geostationary satellite. A non-geostationary satellite or a ground station included in the communication system transmits, to the terminal device, information required for switching a connection destination ground station (hereinafter, the information is referred to as necessary information) in advance before the switching processing. Then, the terminal device switches the connection destination ground station based on the necessary information.

As a result, the terminal device can smoothly switch the ground station based on the necessary information acquired in advance, so that the communication system can realize high communication performance (for example, high connection stability).

In the embodiment of the present disclosure, a ground station (it is also referred to as a ground base station) refers to a base station (including a relay station) installed on the ground. The term "ground" refers to a ground in a broad sense including not only the ground (land) but also the underground, water, and underwater. In the following description, the term "ground station" may be replaced with "gateway".

Although the outline of the present embodiment has been described above, the communication system according to the present embodiment will be described in detail below.

### <<2. Configuration of communication system>>

The communication system 1 is a bent-pipe (transparent)-type mobile satellite communication system. The communication system 1 is a cellular communication system using a radio access technology such as LTE or NR, and provides wireless communication via a satellite station to a terminal device on the ground. The radio access scheme used by the communication system 1 is not limited to LTE and NR, and may be another radio access scheme such as Wideband Code Division Multiple Access (W-CDMA) or Code Division Multiple Access 2000 (CDMA2000).

Hereinafter, a configuration of the communication system 1 will be specifically described.

### <2-1. Overall configuration of communication system>

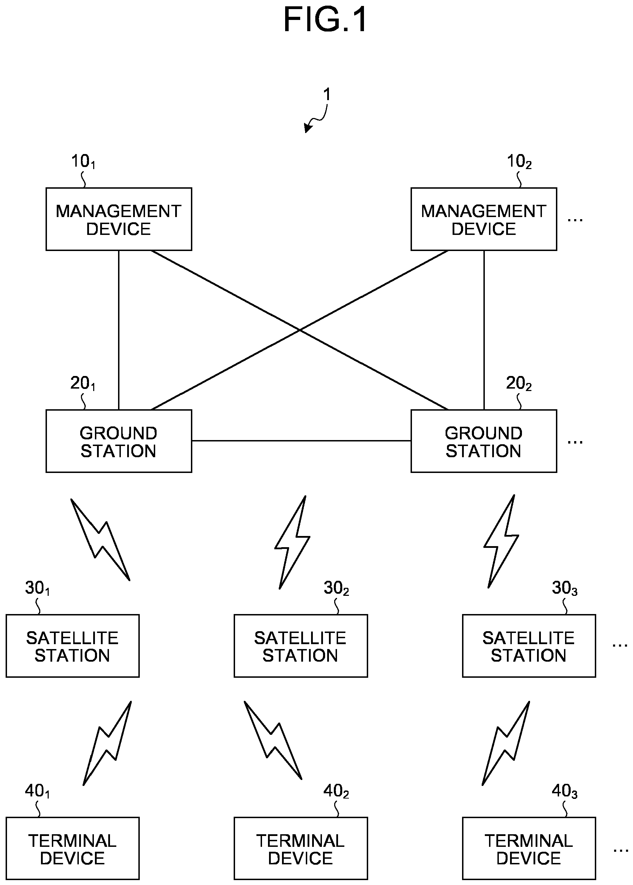

FIG. 1 is a diagram illustrating a configuration example of the communication system 1 according to an embodiment of the present disclosure. The communication system 1 includes a management device 10, a ground station 20, a satellite station 30, and a terminal device 40. The communication system 1 provides the user with a wireless network capable of performing mobile communication by the wireless communication devices constituting the communication system 1 operating in cooperation. The wireless network of the present embodiment includes, for example, a radio access network and a core network. Note that, in the present embodiment, the wireless communication device is a device having a function of wireless communication, and corresponds to the ground station 20, the satellite station 30, and the terminal device 40 in the example of FIG. 1.

The communication system 1 may include a plurality of management devices 10, a plurality of ground stations 20, a plurality of satellite stations 30, and a plurality of terminal devices 40. In the example of FIG. 1, the communication system 1 includes management devices 10₁ and 10₂ and the like as the management device 10, and ground stations 20₁ and 20₂ and the like as the ground station 20, and the communication system 1 includes satellite stations 30₁ and 30₂ and the like as the satellite station 30, and includes terminal devices 40₁, 40₂, and 40₃ and the like as the terminal device 40.

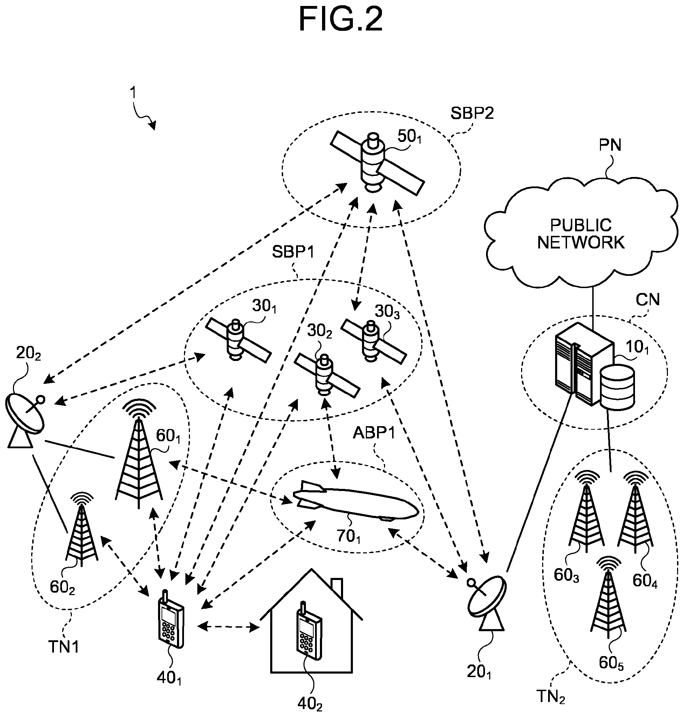

FIG. 2 is a diagram illustrating an example of a wireless network provided by the communication system 1. The ground station 20 (satellite station 30) and the base station 60 form a cell. A cell is an area that covers wireless communication. The cell may be any of a macrocell, a microcell, a femtocell, and a small cell. Note that the communication system 1 may be configured to manage a plurality of cells by a single base station (satellite station), or may be configured to manage one cell by a plurality of base stations.

In the example of FIG. 2, the base stations 60₁ and 60₂ constitute a terrestrial network TN1, and the base stations 60₃, 60₄, and 60₅ constitute a terrestrial network TN2. The terrestrial network TN1 and the terrestrial network TN2 are, for example, networks operated by a wireless communication carrier such as a telephone company. The terrestrial network TN1 and the terrestrial network TN2 may be operated by different wireless communication carriers, or may be operated by the same wireless communication carrier. The terrestrial network TN1 and the terrestrial network TN2 can be regarded as one terrestrial network.

The terrestrial network TN1 and the terrestrial network TN2 are each connected to a core network. In the example of FIG. 2, the base station 60 constituting the terrestrial network TN2 is connected to, for example, the core network CN constituted by the management device 10₁ and the like. If the radio access scheme of the terrestrial network TN2 is LTE, the core network CN is EPC. When the radio access scheme of the terrestrial network TN2 is NR, the core network CN is 5GC. Of course, the core network CN is not limited to the EPC or the 5GC, and may be a core network of another radio access scheme. In the example of FIG. 2, the terrestrial network TN1 is not connected to the core network, but the terrestrial network TN1 may be connected to the core network CN. Furthermore, the terrestrial network TN1 may be connected to a core network (not illustrated) different from the core network CN.

The core network CN includes a gateway device, a barrier switch, and the like, and is connected to the public network PN via the gateway device. The public network PN is, for example, a public data network such as the Internet, a regional IP network, or a telephone network (mobile telephone networks, fixed telephone networks, and the like). The gateway device is, for example, a server device connected to the Internet, a regional IP network, or the like. The gateway switch is, for example, a switch connected to a telephone network of a telephone company. The management device 10₁ may have a function as a gateway device or a gateway switch.

Each of the satellite stations 30 and 50 and the aircraft station 70 illustrated in FIG. 2 is a non-ground station such as a satellite station or an aircraft station. A satellite station group (or a satellite station) constituting a non-terrestrial network is referred to as a spaceborne platform. In addition, an aircraft station group (or an aircraft station) constituting a non-terrestrial network is referred to as an airborne platform. In the example of FIG. 2, the satellite stations 30₁, 30₂, and 30₃ constitute a spaceborne platform SBP1, and the satellite station 50₁ constitutes a spaceborne platform SBP2. In addition, the aircraft station 70₃ constitutes an airborne platform ABP1.

The terminal device 40 can communicate with both the ground station and the non-ground station. In the example of FIG. 2, the terminal device 40₁ can communicate with a ground station constituting the terrestrial network TN1. In addition, the terminal device 40₁ can communicate with the non-ground stations constituting the spaceborne platforms SBP1 and SBP2. The terminal device 40₁ can also communicate with a non-ground station constituting the airborne platform ABP1. Note that the terminal device 40₁ may be able to directly communicate with another terminal device 40 (the terminal device 40₂ in the example of FIG. 2) .

The non-ground station such as the satellite station 30 may be connectable to a terrestrial network or a core network via a relay station. The non-ground stations can directly communicate with each other without a relay station.

The relay station is, for example, an aeronautical station or an earth station. The aeronautical station is a wireless station installed on the ground or a mobile object moving on the ground in order to communicate with an aircraft station. Furthermore, the earth station is a wireless station located on the earth (including air) in order to communicate with a satellite station (space station). The earth station may be a large earth station or a small earth station such as a very small aperture terminal (VSAT). Note that the earth station may be a VSAT controlled earth station (it is also referred to as a master station or a HUB station) or a VSAT earth station (it is also referred to as a slave station). Furthermore, the earth station may be a wireless station installed in a mobile object moving on the ground. For example, as an earth station mounted on a ship, there is an earth station on board vessels (ESV). Furthermore, the earth station may include an aircraft earth station that is installed in an aircraft (including helicopters) and communicates with a satellite station. Furthermore, the earth station may include an aeronautical earth station that is installed on a mobile object moving on the ground and communicates with the aircraft earth station via a satellite station. Note that the relay station may be a portable wireless station that communicates with a satellite station or an aircraft station. The relay station can be regarded as a part of the communication system 1.

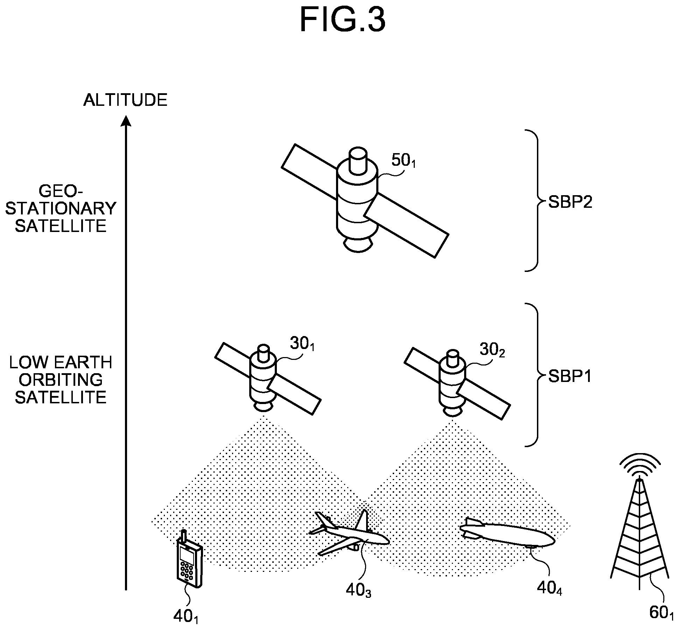

Each device constituting the spaceborne platforms SBP1 and SBP2 performs satellite communication with the terminal device 40. Satellite communication is wireless communication between a satellite station and a communication device. FIG. 3 is a diagram illustrating an outline of satellite communication provided by the communication system 1. The satellite station is mainly divided into a geostationary satellite station and a low earth orbiting satellite station.

The geostationary satellite station is located at an altitude of approximately 35786 km and revolves the earth at the same speed as the rotation speed of the earth. In the example of FIG. 3, the satellite station 50₁ constituting the spaceborne platform SBP2 is a geostationary satellite station. The geostationary satellite station has a relative velocity of substantially 0 with respect to the terminal device 40 on the ground, and is observed as if it is stationary from the terminal device 40 on the ground. The satellite station 50₁ performs satellite communication with terminal devices 40₁, 40₃, 40₄, and the like located on the earth.

The low earth orbiting satellite station is a satellite station that orbits at a lower altitude than a geostationary satellite station or a medium earth orbiting satellite station. The low earth orbiting satellite station is, for example, a satellite station located at an altitude of 500 km to 2000 km. In the example of FIG. 3, the satellite stations 30₂ and 30₃ constituting the spaceborne platform SBP1 are low earth orbiting satellite stations. Note that FIG. 3 illustrates only two satellite stations, namely, the satellite station 30₂ and the satellite station 30₃, as satellite stations constituting the spaceborne platform SBP1. However, actually, in the satellite stations constituting the spaceborne platform SBP1, a low earth orbiting satellite constellation is formed by two or more (for example, several tens to several thousands) satellite stations 30. Unlike the geostationary satellite station, the low earth orbiting satellite station has a relative velocity with respect to the terminal device 40 on the ground, and is observed as if it is moving from the terminal device 40 on the ground. The satellite stations 30₂ and 30₃ constitute cells, respectively, and perform satellite communication with terminal devices 40₁, 40₃, 40₄, and the like located on the earth.

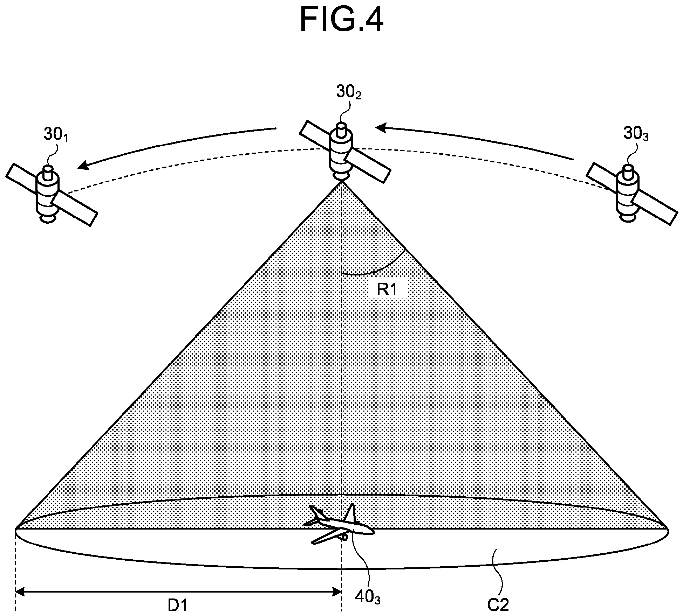

FIG. 4 is a diagram illustrating an example of a cell formed by a non-geostationary satellite. FIG. 4 illustrates a cell C2 formed by the satellite station 30₂ which is a low earth orbiting satellite station. The satellite station orbiting in a low orbit communicates with the terminal device 40 on the ground with a predetermined directivity on the ground. For example, the angle R1 illustrated in FIG. 4 is 40°. In the case of FIG. 4, the radius D1 of the cell C2 formed by the satellite station 30₂ is, for example, 1000 km. The low earth orbiting satellite station moves with a constant velocity. When it becomes difficult for the low earth orbiting satellite station to provide satellite communication to the terminal device 40 on the ground, a subsequent low earth orbiting satellite station (neighbor satellite station) provides satellite communication. In the case of the example of FIG. 4, when it becomes difficult for the satellite station 30₂ to provide satellite communication to the terminal device 40 on the ground, the subsequent satellite station 30₃ provides satellite communication. Note that the values of the angle R1 and the radius D1 described above are merely examples, and are not limited to the above.

As described above, the medium earth orbiting satellite and the low earth orbiting satellite move on the orbit at a very high speed in the sky, and for example, in the case of a low earth orbiting satellite at an altitude of 600 km, the low earth orbiting satellite moves on the orbit at a speed of 7.6 km/S. A low earth orbiting satellite forms a cell (or beam) having a radius of several 10 km to several 100 km on the ground. However, since the cell formed on the ground also moves in accordance with the movement of the satellite, handover may be required even if the terminal device on the ground does not move. For example, assuming a case where the diameter of a cell formed on the ground is 50 km and the terminal device on the ground is not moving, handover occurs in about 6 to 7 seconds.

As described above, the terminal device 40 can perform wireless communication using a non-terrestrial network. Furthermore, the satellite station 30 of the communication system 1 constitutes a non-terrestrial network. As a result, the communication system 1 can extend the service to the terminal device 40 located in an area that cannot be covered by the terrestrial network. For example, the communication system 1 can provide public safety communication and critical communication to a communication device such as an Internet of Things (IoT) device or a machine type communications (MTC) device. In addition, since the use of the non-terrestrial network improves service reliability and recoverability, the communication system 1 can reduce the vulnerability of the service to physical attacks or natural disasters. Furthermore, the communication system 1 can realize service connection to aircraft terminal devices such as airplane passengers and drones, and service connection to mobile terminal devices such as ships and trains. In addition, the communication system 1 can realize provision of A/V content, group communication, an IoT broadcast service, a software download service, a high-efficiency multicast service such as an emergency message, a high-efficiency broadcast service, and the like. Furthermore, the communication system 1 can also realize traffic offloading between a terrestrial network and a non-terrestrial network. In order to realize these, it is desirable that the non-terrestrial network provided by the communication system 1 is subjected to operation integration with the terrestrial network provided by the communication system 1 in an upper layer. In addition, the non-terrestrial network provided by the communication system 1 desirably has a radio access scheme common to that of the terrestrial network provided by the communication system 1.

Note that the devices in the drawings may be considered as devices in a logical sense. That is, some of the devices in the drawing may be realized by a virtual machine (VM), a container, a docker, or the like, and they may be implemented on physically the same hardware.

In addition, in the present embodiment, the ground station can be rephrased as a base station. The satellite station can be rephrased as a relay station. If the satellite station has a function as a base station, the satellite station can be rephrased as a base station.

Note that an LTE base station may be referred to as an evolved node B (eNodeB) or an eNB. Further, an NR base station may be referred to as a gNodeB or a gNB. In LTE and NR, a terminal device (it is also referred to as a mobile station or a terminal) may be referred to as user equipment (UE). Note that the terminal device is a type of communication device, and is also referred to as a mobile station or a terminal.

In the present embodiment, the concept of the communication device includes not only a portable mobile device (terminal device) such as a mobile terminal but also a device installed in a structure or a mobile object. A structure or a mobile object itself may be regarded as a communication device. In addition, the concept of the communication device includes not only a terminal device but also a base station and a relay device. The communication device is a type of processing device and information processing device. Furthermore, the communication device can be rephrased as a transmission device or a reception device.

Hereinafter, a configuration of each device constituting the communication system 1 will be specifically described. Note that the configuration of each device described below is merely an example. The configuration of each device may be different from the following configuration.

### <2-2. Configuration of management device>

Next, a configuration of the management device 10 will be described.

The management device 10 is a device that manages a wireless network. For example, the management device 10 is a device that manages communication of the ground station 20. When the core network is the EPC, the management device 10 is, for example, a device having a function as a mobility management entity (MME). When the core network is 5GC, the management device 10 is, for example, a device having a function as an access and mobility management function (AMF) and/or a session management function (SMF). Of course, the functions of the management device 10 are not limited to the MME, the AMF, and the SMF. For example, when the core network is 5GC, the management device 10 may be a device having a function as a network slice selection function (NSSF), an authentication server function (AUSF), or a unified data management (UDM). Furthermore, the management device 10 may be a device having a function as a home subscriber server (HSS).

Note that the management device 10 may have a function of a gateway. For example, when the core network is the EPC, the management device 10 may have a function as a serving gateway (S-GW) or a packet data network gateway (P-GW). Further, when the core network is 5GC, the management device 10 may have a function as a user plane function (UPF). Note that the management device 10 is not necessarily a device constituting the core network. For example, it is assumed that the core network is a core network of Wideband Code Division Multiple Access (W-CDMA) or Code Division Multiple Access 2000 (CDMA2000). At this time, the management device 10 may be a device that functions as a radio network controller (RNC).

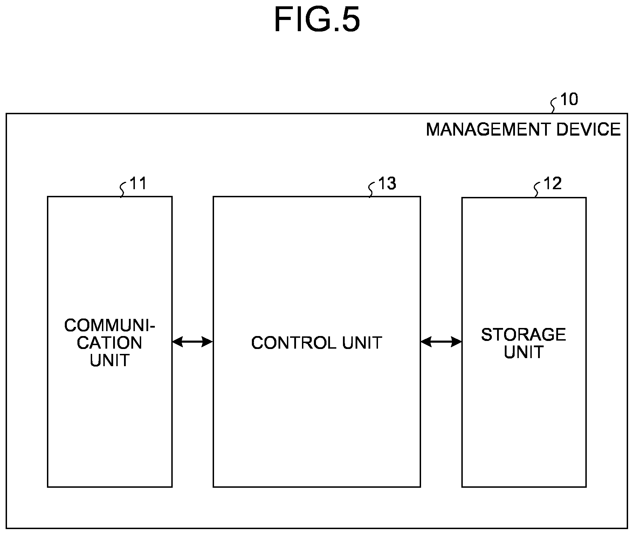

FIG. 5 is a diagram illustrating a configuration example of the management device 10 according to the embodiment of the present disclosure. The management device 10 includes a communication unit 11, a storage unit 12, and a control unit 13. Note that the configuration illustrated in FIG. 5 is a functional configuration, and the hardware configuration may be different from the functional configuration. Furthermore, the functions of the management device 10 may be implemented in a distributed manner in a plurality of physically separated configurations. For example, the management device 10 may include a plurality of server devices.

The communication unit 11 is a communication interface for communicating with other devices. The communication unit 11 may be a network interface or a device connection interface. For example, the communication unit 11 may be a local area network (LAN) interface such as a network interface card (NIC), or may be a USB interface including a universal serial bus (USB) host controller, a USB port, and the like. Furthermore, the communication unit 11 may be a wired interface or a wireless interface. The communication unit 11 functions as a communication unit of the management device 10. The communication unit 11 communicates with the ground station 20 and the like under the control of the control unit 13.

The storage unit 12 is a data readable/writable storage device such as a dynamic random access memory (DRAM), a static random access memory (SRAM), a flash memory, or a hard disk. The storage unit 12 functions as a storage unit of the management device 10. The storage unit 12 stores, for example, a connection state of the terminal device 40. For example, the storage unit 12 stores the RRC state and the ECM state of the terminal device 40. The storage unit 12 may function as a home memory that stores the position information of the terminal device 40.

The control unit 13 is a controller that controls each unit of the management device 10. The control unit 13 is realized by, for example, a processor such as a central processing unit (CPU) or a micro processing unit (MPU). For example, the control unit 13 is realized by the processor executing various programs stored in the storage device inside the management device 10 using a random access memory (RAM) or the like as a work area. Note that the control unit 13 may be realized by an integrated circuit such as an application specific integrated circuit (ASIC) or a field programmable gate array (FPGA). Any of the CPU, the MPU, the ASIC, and the FPGA can be regarded as a controller.

### <2-3. Configuration of ground station>

Next, a configuration of the ground station 20 will be described.

The ground station 20 is a wireless communication device that wirelessly communicates with the terminal device 40 via the satellite station 30. Note that the ground station 20 may be configured to communicate with the terminal device 40 without the satellite station 30.

The ground station 20 is a type of communication device. More specifically, the ground station 20 is a device corresponding to a radio base station (base station, node B, eNB, gNB, and the like) or a wireless access point. The ground station 20 may be a wireless relay station. Furthermore, the ground station 20 may be an optical extension device called a remote radio head (RRH). Furthermore, the ground station 20 may be a receiving station such as a field pickup unit (FPU). Furthermore, the ground station 20 may be an IAB (Integrated Access and Backhaul) donor node or an IAB relay node that provides a radio access line and a radio backhaul line by time division multiplexing, frequency division multiplexing, or space division multiplexing.

Note that the radio access technology used by the ground station 20 may be a cellular communication technology or a wireless LAN technology. Of course, the radio access technology used by the ground station 20 is not limited thereto, and may be another radio access technology. For example, the radio access technology used by the ground station 20 may be an LPWA communication technology. Of course, the wireless communication used by the ground station 20 may be wireless communication using millimeter waves. Furthermore, the wireless communication used by the ground station 20 may be wireless communication using radio waves or wireless communication (optical wireless) using infrared rays or visible light.

The ground station 20 may be capable of performing non-orthogonal multiple access (NOMA) communication with the terminal device 40. Here, the NOMA communication is communication using a non-orthogonal resource (transmission, reception, or both). Note that the ground station 20 may be able to perform NOMA communication with another ground station 20.

Note that the ground stations 20 may be able to communicate with each other via a base station-core network interface (for example, S1 interface or the like). This interface may be either wired or wireless. Furthermore, the base stations may be capable of communicating with each other via an inter-base station interface (for example, X2 interface, S1 interface, and the like). This interface may be either wired or wireless.

Note that the concept of the base station (it is also referred to as a base station) includes not only a donor base station but also a relay base station (it is also referred to as a relay station). In addition, the concept of the base station includes not only a structure having a function of the base station but also a device installed in the structure.

The structure is, for example, a building such as a high-rise building, a house, a steel tower, a station facility, an airport facility, a harbor facility, or a stadium. Note that the concept of a structure includes not only a building but also a construction (non-building structure) such as a tunnel, a bridge, a dam, a wall, or an iron pillar, and facilities such as a crane, a gate, or a windmill. In addition, the concept of the structure includes not only a structure on land (on the ground in a narrow sense) or in the ground, but also a structure on water such as a platform or a megafloat, and a structure under water such as an marine observation facility. The base station may be referred to as an information processing device.

The ground station 20 may be a donor station or a relay station. Furthermore, the ground station 20 may be a fixed station or a mobile station. The mobile station is a wireless communication device (for example, a base station) configured to be movable. At this time, the ground station 20 may be a device installed in a mobile object or may be a mobile object itself. For example, a relay station having mobility can be regarded as the ground station 20 as a mobile station. In addition, a device that originally has mobility, such as a vehicle, a drone, or a smartphone, and has a function of a base station (at least a part of the function of the base station) also corresponds to the ground station 20 as a mobile station.

Here, the mobile object may be a mobile terminal such as a smartphone or a mobile phone. In addition, the mobile object may be a mobile object (for example, a vehicle such as an automobile, a bicycle, a bus, a truck, a motorcycle, a train, or a linear motor car) that moves on land (on the ground in a narrow sense) or a mobile object (for example, the subway) that moves in the ground (for example, in the tunnel).

In addition, the mobile object may be a mobile object (for example, a ship such as a passenger ship, a cargo ship, or a hovercraft) that moves over water or a mobile object (for example, submersibles such as submersibles, submersibles, and unmanned submersibles) that moves under water.

Note that the mobile object may be a mobile object (for example, an aircraft such as an airplane, an airship, or a drone) that moves in the atmosphere.

Furthermore, the ground station 20 may be a ground base station (ground station) installed on the ground. For example, the ground station 20 may be a base station arranged in a structure on the ground, or may be a base station installed in a mobile object moving on the ground. More specifically, the ground station 20 may be an antenna installed in a structure such as a building and a signal processing device connected to the antenna. Of course, the ground station 20 may be a structure or a mobile object itself. The term "ground" refers to a ground in a broad sense including not only the land (ground in a narrow sense) but also the underground, water, and underwater. Note that the ground station 20 is not limited to a ground base station. For example, the ground station 20 may be an aircraft station. From the viewpoint of the satellite station 30, an aircraft station located on the earth can also be regarded as a ground station.

An aircraft station is a wireless communication device capable of floating in the atmosphere, such as an aircraft. The aircraft station may be a device mounted on an aircraft or the like, or may be an aircraft itself. Note that the concept of an aircraft includes not only heavy aircraft such as an airplane and a glider but also light aircraft such as a balloon and an airship. In addition, the concept of an aircraft includes not only a heavy aircraft and a light aircraft but also a rotorcraft such as a helicopter and an autogyro. Note that the aircraft station (alternatively, an aircraft on which an aircraft station is mounted) may be an unmanned aerial vehicle such as a drone.

Note that the concept of the unmanned aerial vehicle also includes an unmanned aircraft system (UAS) and a tethered UAS. The concept of unmanned aerial vehicles also includes LTA (Lighter than Air UAS) and HTA (Heavier than Air UAS). Other concepts of unmanned aerial vehicles also include HAPs (High Altitude UAS Platforms).

The coverage of the ground station 20 may be large such as a macrocell or small such as a picocell. Of course, the magnitude of the coverage of the ground station 20 may be extremely small, such as a femtocell. In addition, the ground station 20 may have a beamforming capability. In this case, the ground station 20 may form a cell or a service area for each beam.

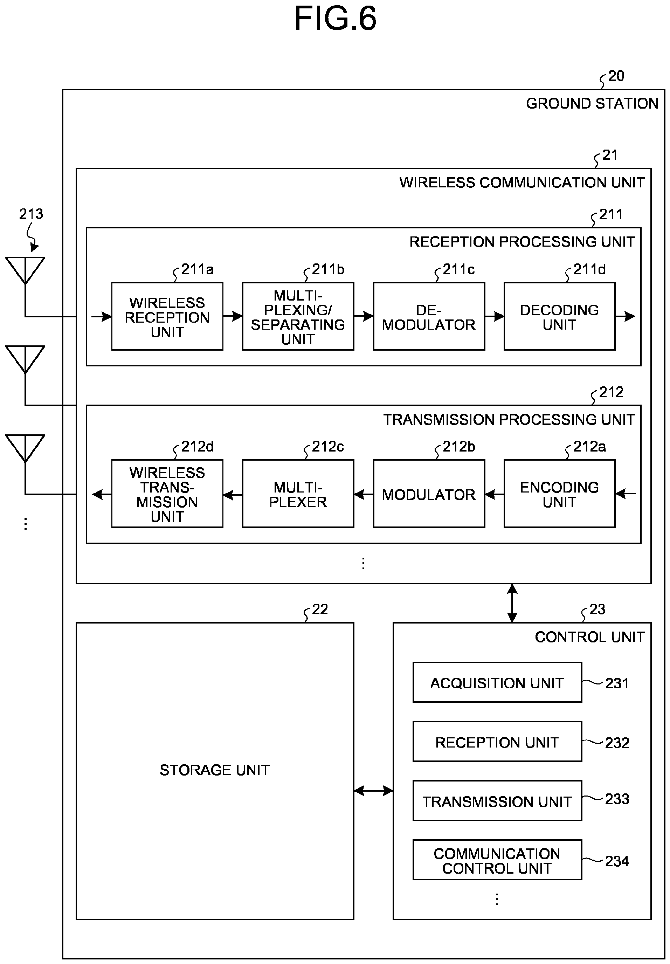

FIG. 6 is a diagram illustrating a configuration example of the ground station 20 according to the embodiment of the present disclosure. The ground station 20 includes a wireless communication unit 21, a storage unit 22, and a control unit 23. Note that the configuration illustrated in FIG. 6 is a functional configuration, and the hardware configuration may be different from the functional configuration. Furthermore, the functions of the ground station 20 may be implemented in a distributed manner in a plurality of physically separated configurations.

The wireless communication unit 21 is a signal processing unit for wirelessly communicating with other wireless communication devices (for example, the terminal device 40). The wireless communication unit 21 operates under the control of the control unit 23. The wireless communication unit 21 corresponds to one or a plurality of radio access schemes. For example, the wireless communication unit 21 supports both NR and LTE. The wireless communication unit 21 may support W-CDMA or CDMA2000 in addition to NR or LTE. Furthermore, the wireless communication unit 21 may support an automatic retransmission technology such as hybrid automatic repeat request (HARQ).

The wireless communication unit 21 includes a reception processing unit 211, a transmission processing unit 212, and an antenna 213. The wireless communication unit 21 may include a plurality of reception processing units 211, a plurality of transmission processing units 212, and a plurality of antennas 213. When the wireless communication unit 21 supports a plurality of radio access schemes, each unit of the wireless communication unit 21 can be configured individually for each radio access scheme. For example, the reception processing unit 211 and the transmission processing unit 212 may be individually configured by LTE and NR. Furthermore, the antenna 213 may include a plurality of antenna elements (for example, a plurality of patch antennas). In this case, the wireless communication unit 21 may be configured to be able to form beams. The wireless communication unit 21 may be configured to enable polarization beamforming using vertically polarized waves (V-polarized waves) and horizontally polarized waves (H-polarized waves).

The reception processing unit 211 processes the uplink signal received via the antenna 213. For example, the reception processing unit 211 performs down-conversion, removal of an unnecessary frequency component, control of an amplification level, quadrature demodulation, conversion to a digital signal, removal of a guard interval (cyclic prefix), extraction of a frequency domain signal by fast Fourier transform, and the like on the uplink signal. Then, the reception processing unit 211 separates an uplink channel such as a physical uplink shared channel (PUSCH) and a physical uplink control channel (PUCCH) and an uplink reference signal from the signals subjected to these processes. Further, the reception processing unit 211 demodulates the received signal using a modulation scheme such as binary phase shift keying (BPSK) or quadrature phase shift keying (QPSK) with respect to the modulation symbol of the uplink channel. The modulation scheme used for demodulation may be 16 quadrature amplitude modulation (QAM), 64 QAM, or 256 QAM. In this case, the signal points on the constellation do not necessarily have to be equidistant. The constellation may be a non-uniform constellation (NUC). Then, the reception processing unit 211 performs a decoding process on the demodulated encoded bits of the uplink channel. The decoded uplink data and uplink control information are output to the control unit 23.

The transmission processing unit 212 performs a process of transmitting the downlink control information and the downlink data. For example, the transmission processing unit 212 encodes the downlink control information and the downlink data input from the control unit 23 using an encoding method such as block encoding, convolutional encoding, turbo encoding, or the like. Then, the transmission processing unit 212 modulates the encoded bits by a predetermined modulation scheme such as BPSK, QPSK, 16 QAM, 64 QAM, or 256 QAM. In this case, the signal points on the constellation do not necessarily have to be equidistant. The constellation may be a non-uniform constellation. Then, the transmission processing unit 212 multiplexes the modulation symbol of each channel and the downlink reference signal and arranges the multiplexed symbols in a predetermined resource element. Then, the transmission processing unit 212 performs various types of signal processing on the multiplexed signal. For example, the transmission processing unit 212 performs processing such as conversion into a time domain by fast Fourier transform, addition of a guard interval (cyclic prefix), generation of a baseband digital signal, conversion into an analog signal, quadrature modulation, up-conversion, removal of an extra frequency component, and amplification of power. The signal generated by the transmission processing unit 212 is transmitted from the antenna 213.

The antenna 213 is an antenna device (antenna unit) that converts a current and a radio wave mutually. The antenna 213 may include one antenna element (for example, one patch antenna) or may include a plurality of antenna elements (for example, a plurality of patch antennas). In a case where the antenna 213 includes a plurality of antenna elements, the wireless communication unit 21 may be configured to be able to form beams. For example, the wireless communication unit 21 may be configured to generate a directional beam by controlling the directivity of a wireless signal using a plurality of antenna elements. Note that the antenna 213 may be a dual-polarized antenna. When the antenna 213 is a dual-polarized antenna, the wireless communication unit 21 may use vertically polarized waves (V-polarized waves) and horizontally polarized waves (H-polarized waves) in transmitting wireless signals. Then, the wireless communication unit 21 may control the directivity of the wireless signal transmitted using the vertically polarized wave and the horizontally polarized wave.

The storage unit 22 is a storage device capable of reading and writing data, such as a DRAM, an SRAM, a flash memory, or a hard disk. The storage unit 22 functions as a storage unit of the ground station 20.

The control unit 23 is a controller that controls each unit of the ground station 20. The control unit 23 is realized by, for example, a processor such as a central processing unit (CPU) or a micro processing unit (MPU). For example, the control unit 23 is implemented by the processor executing various programs stored in a storage device inside the ground station 20 using a random access memory (RAM) or the like as a work area. Note that the control unit 23 may be realized by an integrated circuit such as an application specific integrated circuit (ASIC) or a field programmable gate array (FPGA). Any of the CPU, the MPU, the ASIC, and the FPGA can be regarded as a controller.

The control unit 23 includes an acquisition unit 231, a reception unit 232, a transmission unit 233, and a communication control unit 234. Each block (the acquisition unit 231 to the communication control unit 234) constituting the control unit 23 is a functional block indicating a function of the control unit 23. These functional blocks may be software blocks or hardware blocks. For example, each of the functional blocks described above may be one software module realized by software (including microprograms), or may be one circuit block on a semiconductor chip (die). Of course, each functional block may be one processor or one integrated circuit. The control unit 23 may be configured by a functional unit different from the above-described functional block. A configuration method of the functional block is arbitrary.

### <2-4. Configuration of satellite station>

Next, a configuration of the satellite station 30 will be described.

The satellite station 30 is a relay station that relays communication between the ground station 20 and the terminal device 40. Note that the satellite station 30 may be a base station that provides the terminal device 40 with the function of a base station.

The satellite station 30 is a wireless communication device capable of floating outside the atmosphere. The satellite station 30 may be a device mounted on a space mobile object such as an artificial satellite, or may be a space mobile object itself. A space mobile object is a mobile object that moves outside the atmosphere. Examples of the space mobile object include artificial celestial bodies such as artificial satellites, spacecraft, space stations, and probes.

Note that the satellite serving as the satellite station 30 may be any of a low earth orbiting (LEO) satellite, a medium earth orbiting (MEO) satellite, a geostationary earth orbiting (GEO) satellite, and a highly elliptical orbiting (HEO) satellite. Of course, the satellite station may be a device mounted on a low earth orbiting satellite, a medium earth orbiting satellite, a geostationary earth orbiting satellite, or a highly elliptical orbiting satellite.

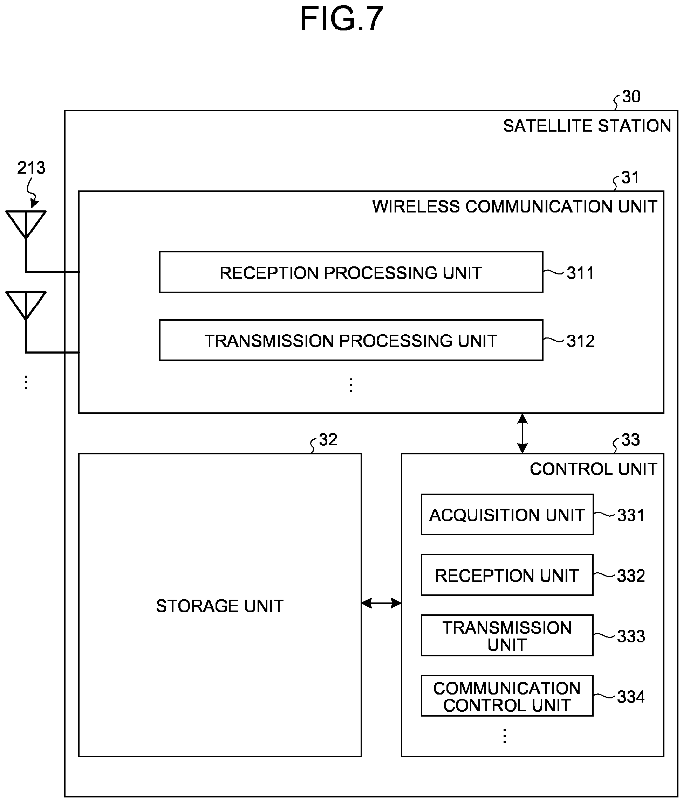

FIG. 7 is a diagram illustrating a configuration example of the satellite station 30 according to the embodiment of the present disclosure. The satellite station 30 includes a wireless communication unit 31, a storage unit 32, and a control unit 33. Note that the configuration illustrated in FIG. 7 is a functional configuration, and the hardware configuration may be different from the functional configuration. Furthermore, the functions of the satellite station 30 may be implemented in a distributed manner in a plurality of physically separated configurations.

The wireless communication unit 31 is a wireless communication interface that wirelessly communicates with other wireless communication devices (for example, the ground station 20, the terminal device 40, the satellite station 50, and another satellite station 30). The wireless communication unit 31 supports one or a plurality of radio access schemes. For example, the wireless communication unit 31 supports both NR and LTE. The wireless communication unit 31 may support W-CDMA or CDMA3000 in addition to NR or LTE. The wireless communication unit 31 includes a reception processing unit 311, a transmission processing unit 312, and an antenna 313. The wireless communication unit 31 may include a plurality of reception processing units 311, a plurality of transmission processing units 312, and a plurality of antennas 313. When the wireless communication unit 31 supports a plurality of radio access schemes, each unit of the wireless communication unit 31 can be configured individually for each radio access scheme. For example, the reception processing unit 311 and the transmission processing unit 312 may be individually configured by LTE and NR. The configurations of the reception processing unit 311, the transmission processing unit 312, and the antenna 313 are similar to the configurations of the reception processing unit 311, the transmission processing unit 312, and the antenna 313 described above. Note that the wireless communication unit 31 may be configured to be able to form beams similarly to the wireless communication unit 21.

The storage unit 32 is a storage device capable of reading and writing data, such as a DRAM, an SRAM, a flash memory, or a hard disk. The storage unit 32 functions as a storage unit of the satellite station 30.

The control unit 33 is a controller that controls each unit of the satellite station 30. The control unit 33 is realized by, for example, a processor such as a CPU or an MPU. For example, the control unit 33 is realized by the processor executing various programs stored in a storage device inside the satellite station 30 using a RAM or the like as a work area. Note that the control unit 33 may be realized by an integrated circuit such as an ASIC or an FPGA. Any of the CPU, the MPU, the ASIC, and the FPGA can be regarded as a controller.

The control unit 33 includes an acquisition unit 331, a reception unit 332, a transmission unit 333, and a communication control unit 334. Each block (the acquisition unit 331 to the communication control unit 334) constituting the control unit 33 is a functional block indicating a function of the control unit 33. These functional blocks may be software blocks or hardware blocks. For example, each of the functional blocks described above may be one software module realized by software (including microprograms), or may be one circuit block on a semiconductor chip (die). Of course, each functional block may be one processor or one integrated circuit. The control unit 33 may be configured by a functional unit different from the above-described functional block. A configuration method of the functional block is arbitrary.

### <2-5. Configuration of terminal device>

Next, a configuration of the terminal device 40 will be described.

The terminal device 40 is a wireless communication device that wirelessly communicates with other communication devices such as the ground station 20, the satellite stations 30 and 50, the base station 60, and the aircraft station 70. The terminal device 40 is, for example, a mobile phone, a smart device (smartphone or tablet), a personal digital assistant (PDA), or a personal computer. Furthermore, the terminal device 40 may be a device such as a business camera provided with a communication function, or may be a motorcycle, a mobile relay vehicle, or the like on which a communication device such as a field pickup unit (FPU) is mounted. Furthermore, the terminal device 40 may be an M2M (Machine to Machine) device or an IoT (Internet of Things) device.

Note that the terminal device 40 may be able to perform NOMA communication with the ground station 20. Furthermore, the terminal device 40 may be able to use an automatic retransmission technology such as HARQ when communicating with the ground station 20. The terminal device 40 may be capable of performing sidelink communication with another terminal device 40. The terminal device 40 may also be able to use an automatic retransmission technology such as HARQ when performing sidelink communication. Note that the terminal device 40 may also be capable of performing NOMA communication in communication (sidelink) with other terminal devices 40. Furthermore, the terminal device 40 may be able to perform LPWA communication with another communication device (for example, the ground station 20 and the another terminal device 40). Furthermore, the wireless communication used by the terminal device 40 may be wireless communication using millimeter waves. Note that the wireless communication (including sidelink communication) used by the terminal device 40 may be wireless communication using radio waves or wireless communication (optical wireless) using infrared rays or visible light.

Furthermore, the terminal device 40 may be a mobile device. The mobile device is a mobile wireless communication device. At this time, the terminal device 40 may be a wireless communication device installed in a mobile object or may be a mobile object itself. For example, the terminal device 40 may be a vehicle that moves on a road such as an automobile, a bus, a truck, or a motorcycle, or a wireless communication device mounted on the vehicle. Note that the mobile object may be a mobile terminal, or may be a mobile object that moves on the land (the ground in a narrow sense), under the ground, on the water, or under water. Furthermore, the mobile object may be a mobile object that moves inside the atmosphere, such as a drone or a helicopter, or may be a mobile object that moves outside the atmosphere, such as an artificial satellite.

The terminal device 40 may be simultaneously connected to a plurality of base stations or a plurality of cells to perform communication. For example, in a case where one base station supports a communication area via a plurality of cells (for example, pCell, sCell), the plurality of cells can be bundled and communicated between the ground station 20 and the terminal device 40 by a carrier aggregation (CA) technology, a dual connectivity (DC) technology, or a multi-connectivity (MC) technology. Alternatively, the terminal device 40 and the plurality of ground stations 20 can communicate with each other by a coordinated transmission and reception (CoMP: Coordinated Multi-Point Transmission and Reception) technology via cells of different ground stations 20.

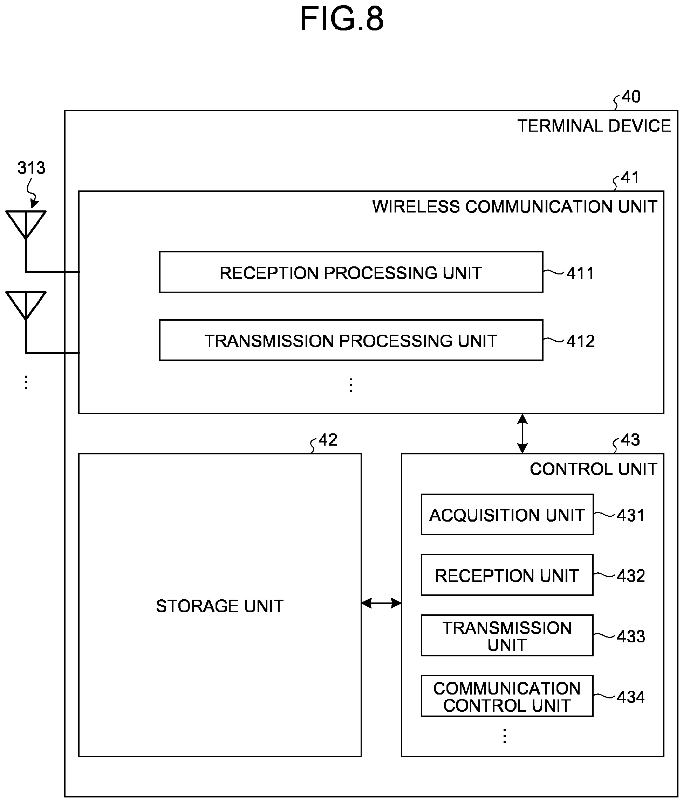

FIG. 8 is a diagram illustrating a configuration example of the terminal device 40 according to the embodiment of the present disclosure. The terminal device 40 includes a wireless communication unit 41, a storage unit 42, and a control unit 43. Note that the configuration illustrated in FIG. 8 is a functional configuration, and the hardware configuration may be different from the functional configuration. Furthermore, the functions of the terminal device 40 may be implemented in a distributed manner in a plurality of physically separated configurations.

The wireless communication unit 41 is a signal processing unit for wirelessly communicating with other wireless communication devices (for example, the ground station 20 and the another terminal device 40). The wireless communication unit 41 operates under the control of the control unit 43. The wireless communication unit 41 includes a reception processing unit 411, a transmission processing unit 412, and an antenna 413. The configurations of the wireless communication unit 41, the reception processing unit 411, the transmission processing unit 412, and the antenna 413 may be similar to those of the wireless communication unit 21, the reception processing unit 211, the transmission processing unit 212, and the antenna 213 of the ground station 20. Further, the wireless communication unit 41 may be configured to be able to form beams similarly to the wireless communication unit 21.

The storage unit 42 is a storage device capable of reading and writing data, such as a DRAM, an SRAM, a flash memory, or a hard disk. The storage unit 42 functions as a storage unit of the terminal device 40.

The control unit 43 is a controller that controls each unit of the terminal device 40. The control unit 43 is realized by, for example, a processor such as a CPU or an MPU. For example, the control unit 43 is realized by a processor executing various programs stored in a storage device inside the terminal device 40 using a RAM or the like as a work area. Note that the control unit 43 may be realized by an integrated circuit such as an ASIC or an FPGA. Any of the CPU, the MPU, the ASIC, and the FPGA can be regarded as a controller.

The control unit 43 includes an acquisition unit 431, a reception unit 432, a transmission unit 433, and a communication control unit 434. Each block (the acquisition unit 431 to the communication control unit 434) constituting the control unit 43 is a functional block indicating a function of the control unit 43. These functional blocks may be software blocks or hardware blocks. For example, each of the functional blocks described above may be one software module realized by software (including microprograms), or may be one circuit block on a semiconductor chip (die). Of course, each functional block may be one processor or one integrated circuit. The control unit 43 may be configured by a functional unit different from the above-described functional block. A configuration method of the functional block is arbitrary.

### <<3. Switching of ground station>>

Although the configuration of the communication system 1 has been described above, next, a problem related to switching of the ground station in mobile satellite communication will be described. In the present embodiment, bent-pipe (transparent)-type satellite communication using a non-geostationary satellite is considered as mobile satellite communication.

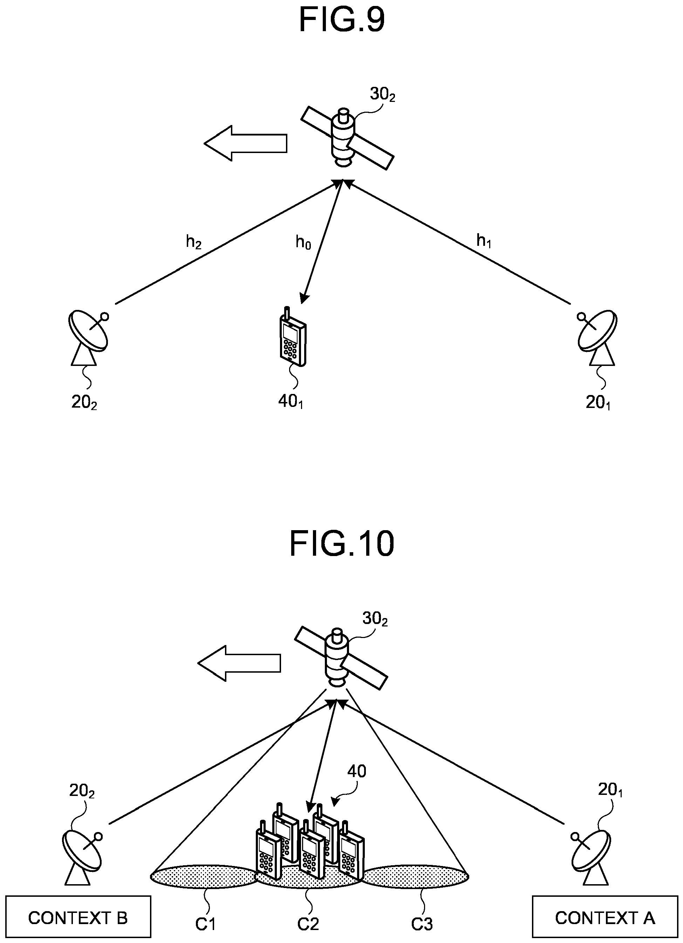

In a bent-pipe (transparent)-type communication, switching may occur in a ground station (gateway) connected to a satellite station. FIG. 9 is a diagram for explaining a problem at the time of switching the ground station. Specifically, FIG. 9 illustrates a state in which switching of the ground station occurs as the satellite station 30₂ moves. In the example of FIG. 9, the satellite station 30₂ performs reflection, amplification, frequency conversion, and the like of radio waves. A link between the satellite station 30₂ and the ground stations 20₁ and 20₂ is a feeder link, and a link between the satellite station 30₂ and the terminal device 40₁ is a service link.

When the switching of the ground station occurs, the path of the feeder link is switched as illustrated in FIG. 9. For example, in the example of FIG. 9, when the satellite station 30₂ is connected to the ground station 20₁, the terminal device 40₁ connects to the core network using the channel h0 + h1, but when the satellite station 30₂ switches the ground station to the ground station 20₂, the terminal device 40₁ connects to the core network using the channel h0 + h2.

When the switching of the ground station occurs, the channel state is switched as illustrated in FIG. 9, so that a countermeasure for smooth switching is required.

### <3-1. Problems in application of conventional handover>

As one means for solving this problem, a method is conceived in which the terminal device 40₁ executes a conventional handover procedure to switch the connection from the ground station 20₁ to the ground station 20₂.

FIG. 10 is a diagram for describing ground station switching by the handover procedure. In the example of FIG. 10, a plurality of cells (cells C1, C2, C3 shown in FIG. 10) are formed by one or a plurality of satellite stations 30. Then, a plurality of terminal devices 40 are located in one cell (cell C2 in the example of FIG. 10).

In this case, in addition to handover of the cell formed by the satellite station 30, handover also occurs when the satellite station 30 switches the connection destination ground station 20, and thus handover procedures frequently occur. In particular, since it is also considered that the satellite station 30 communicates with a large number of IoT terminals such as sensors, for example, in a case where a large number of terminal devices 40 are located in one cell as illustrated in FIG. 10, a large amount of random access may occur. Further, data communication needs to be temporarily stopped during handover.

### <3-2. Problems in seamless switching>

In addition, as one of means for switching the connection destination ground station without performing the handover procedure, a method of handing over connection information (context) held by the ground station before switching to the switching destination ground station is conceived.

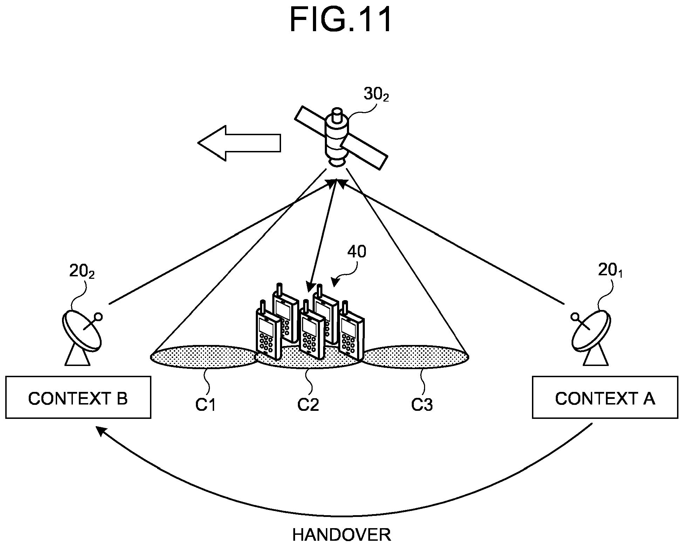

FIG. 11 is a diagram for describing seamless ground station switching. In this case, by handing over the connection information between the ground stations 20, the terminal device 40 can operate as if it continues to be connected to the same ground station 20, so that it is not necessary to perform random access and it is not necessary to perform handover.

However, in a case where the ground station 20 is switched, the propagation path of the link (service link) between the terminal device 40 and the satellite station 30 is the same before and after the switching, but the propagation path of the link (feeder link) between the ground station 20 and the terminal device 40 is different before and after the switching. That is, when viewed from the terminal device 40, it seems that the terminal device is continuously connected to the same satellite station 30, but since the feeder link is switched, it is necessary to cope with a change in the propagation path caused by switching of the feeder link. The problems include the following (1) to (3).

### (1) Transmission during feeder link connection destination switching

During the connection destination switching, since there is a period during which the base station and the terminal cannot transmit and receive data, handling during the switching is required.

### (2) Update of timing advance

Before and after the connection destination switching, it is necessary to change the value of timing advance. Depending on the distance difference of the connection destination, the value needs to be greatly changed.

### (3) Transmission timing resynchronization

It is necessary to resynchronize the transmission timing before and after the connection destination switching. Depending on the distance difference of the connection destination, the value needs to be greatly changed.

### <<4. Basic operation of communication system>>

Although the problem of the switching of the ground station has been described above, the basic operation of the communication system 1 will be described before describing the operation of the communication system 1 that solves the problem. First, an initial connection process will be described.

### <4-1. Initial connection processing>

The initial connection process is a process for transitioning the wireless connection state of the terminal device 40 from the unconnected state (unconnected state) to the connected state (connected state). The unconnected state is, for example, RRC_IDLE or RRC_INACTIVE. RRC_IDLE is an idle state in which the terminal device is not connected to any cell, and is also referred to as an idle mode. In addition, RRC_INACTIVE is a radio connection state indicating an inactive state newly defined in NR, and is also referred to as an inactive mode. Note that the non-connection state may include the lightning mode. Furthermore, the connection state is, for example, RRC_CONNECTED. RRC_CONNECTED is a connection state in which the terminal device is connected to any cell, and is also referred to as a CONNECTED mode.

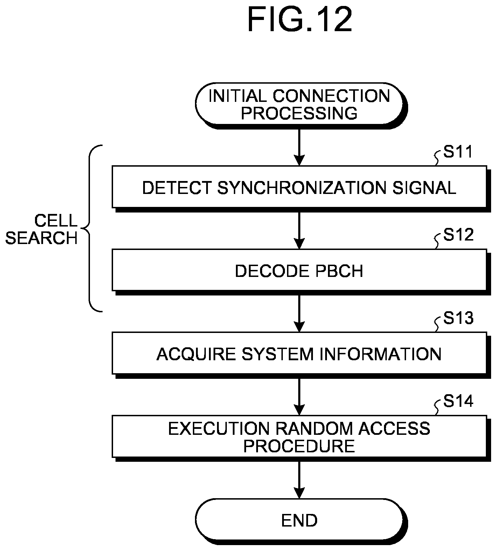

FIG. 12 is a flowchart illustrating an example of the initial connection processing. The initial connection processing will be described below with reference to FIG. 12. The initial connection processing described below is executed, for example, when the terminal device 40 is powered on. In the following description, it is assumed that the base station to which the terminal device 40 is connected is the ground station 20. The following processing is executed between the terminal device 40 and the ground station 20 via the satellite station 30.

First, the terminal device 40 in the unconnected state performs cell search. The cell search is a procedure for user equipment (UE) to detect a physical cell ID (PCI) of a cell and obtain time and frequency synchronization. The cell search of the present embodiment includes steps of detecting a synchronization signal and decoding a PBCH. The reception unit 432 of the terminal device 40 detects a cell synchronization signal (Step S11).

The reception unit 432 performs synchronization in the downlink with the cell based on the detected synchronization signal. Then, after the downlink synchronization is established, the reception unit 432 attempts to decode the PBCH and acquires a master information block (MIB) that is a part of the system information (Step S12).

The system information is information for reporting a configuration in a cell to which the system information is transmitted. The system information includes, for example, information related to access to a cell, information related to cell selection, information related to other RATs and other systems, and the like. The system information includes an MIB and a system information block (SIB). The MIB is physical layer information necessary for receiving the SIB and the like, and is information having a fixed payload size reported by the PBCH. The MIB includes a part of a system frame number, information of at least Msg. 2/4 for the SIB1 and initial connection, and subcarrier spacing of paging and broadcast SI messages, information of a subcarrier offset, information of a DMRS type A location, PDCCH configuration for at least SIB1, information of cell barred, information of intra-frequency reselection, and the like. The SIB is system information other than the MIB and is reported by the PDSCH.

It should be noted that the system information can be classified into first system information, second system information, and third system information. The first system information and the second system information include information related to access to a cell, information related to acquisition of other system information, and information related to cell selection. Information included in the MIB is first system information. Information included in the SIB1 in the SIB is second system information. The remaining system information is third system information.

Also in NR, system information is reported from the NR cell. The physical channel carrying the system information may be transmitted in a slot or a mini-slot. The mini-slot is defined by a number of symbols smaller than the number of symbols of the slot. Since the physical channel carrying the system information is transmitted in the mini-slot, the time required for the beam sweep is shortened, and the overhead can be reduced. For NR, the first system information is transmitted on the NR-PBCH, and the second system information is transmitted on a physical channel different from the NR-PBCH.

The acquisition unit 431 of the terminal device 40 acquires the second system information based on the MIB (that is, the first system information) (Step S13). As described above, the second system information includes the SIB1 and the SIB2.

The SIB1 is scheduling information of access control information of a cell and system information other than the SIB1. In the case of NR, the SIB1 includes information related to cell selection (for example, cellSelectionInfo), information related to cell access (for example, cellAccessRelatedInfo), information related to connection establishment failure control (for example, connEstFailureControl), scheduling information of system information other than the SIB1 (for example, si-SchedulingInfo), configuration of a serving cell, and the like. The configuration of the serving cell includes a cell-specific parameter, and includes a downlink configuration, an uplink configuration, TDD configuration information, and the like. The uplink configuration includes a RACH configuration and the like. Further, in the case of LTE, the SIB1 includes access information of a cell, cell selection information, maximum uplink transmission power information, TDD configuration information, a period of system information, mapping information of system information, a length of a system information (SI) window, and the like.

In the case of NR, the SIB2 includes cell reselection information (for example, cellReselectionInfoCommon) and cell reselection serving frequency information (for example, cellReselectionServingFreqInfo). In the case of LTE, the SIB2 includes connection prohibition information, radio resource configuration information (radioResourceConfigCommon) common to cells, uplink carrier information, and the like. The radio resource configuration information common to cells includes configuration information of a physical random access channel (PRACH) and a random access channel (RACH) common to cells.

Note that, in a case where the acquisition unit 431 has not been able to acquire the system information necessary for establishing the link, the control unit 43 of the terminal device 40 determines that access to the cell is prohibited. For example, in a case where the first system information cannot be acquired, the control unit 43 determines that access to the cell is prohibited. In this case, the control unit 43 ends the initial connection processing.

In a case where the system information can be acquired, the control unit 43 executes a random access procedure based on the first system information and/or the second system information (Step S14). The random access procedure may be referred to as a random access channel procedure (RACH procedure) or a RA procedure (RA procedure). Upon completion of the random access procedure, the terminal device 40 transitions from the unconnected state to the connected state.

### <4-2. Random access procedure>

Next, the random access procedure will be described. The random access procedure is performed for the purpose of "RRC connection setup" from the idle state to the connected state (or the inactive state), "request for state transition" from the inactive state to the connected state, and the like. The random access procedure is also used for the purpose of "scheduling request" for making a resource request for uplink data transmission and "timing advance adjustment" for adjusting uplink synchronization. In addition, the random access procedure is performed in the case of "on-demand SI request" for requesting system information that is not transmitted, "beam recovery" for recovering interrupted beam connection, "handover" for switching connected cells, and the like.

The "RRC connection setup" is an operation executed when the terminal device 40 is connected to the ground station 20 according to occurrence of traffic or the like. Specifically, it is an operation of passing information related to connection (for example, UE context) from the ground station 20 to the terminal device 40. The UE context is managed by predetermined communication device identification information (for example, C-RNTI) instructed from the ground station 20. When this operation is finished, the terminal device 40 transitions from the idle state to the inactive state or from the idle state to the connected state.

The "request for state transition" is an operation in which the terminal device 40 requests state transition from the inactive state to the connected state according to occurrence of traffic or the like. By transitioning to the connected state, the terminal device 40 can transmit and receive unicast data to and from the ground station 20.

The "scheduling request" is an operation in which the terminal device 40 makes a resource request for uplink data transmission according to occurrence of traffic or the like. After normally receiving the scheduling request, the ground station 20 allocates a resource of the PUSCH to the communication device. Note that the scheduling request is also performed by the PUCCH.

The "timing advance adjustment" is an operation for adjusting an error between downlink and uplink frames caused by a propagation delay. The terminal device 40 transmits a physical random access channel (PRACH) at a timing adjusted to the downlink frame. As a result, the ground station 20 can recognize the propagation delay with the terminal device 40, and can instruct the value of the timing advance to the terminal device 40 by Message 2 or the like.

The "on-demand SI request" is an operation of requesting the ground station 20 to transmit system information when the terminal device 40 needs the system information that has not been transmitted for the purpose of overhead of the system information or the like.

The "beam recovery" is an operation of requesting return when communication quality is deteriorated due to movement of the terminal device 40 or interruption of a communication path by another object after the beam is established. Upon receiving this request, the ground station 20 attempts connection with the terminal device 40 using different beams.

"Handover" is an operation of switching connection from a connected cell (serving cell) to a cell adjacent to the cell (neighbor cell) due to a change in a radio wave environment such as movement of the terminal device 40. The terminal device 40 that has received handover command from the ground station 20 makes a connection request to the neighbor cell designated by the handover command.

The random access procedure includes a contention-based random access procedure and a non-contention-based random access procedure. First, a contention-based random access procedure will be described.

Note that the random access procedure described below is a random access procedure assuming that the RAT supported by the communication system 1 is LTE. However, the random access procedure described below is also applicable to a case where the RAT supported by the communication system 1 is other than LTE.

### (Contention-based random access procedure)

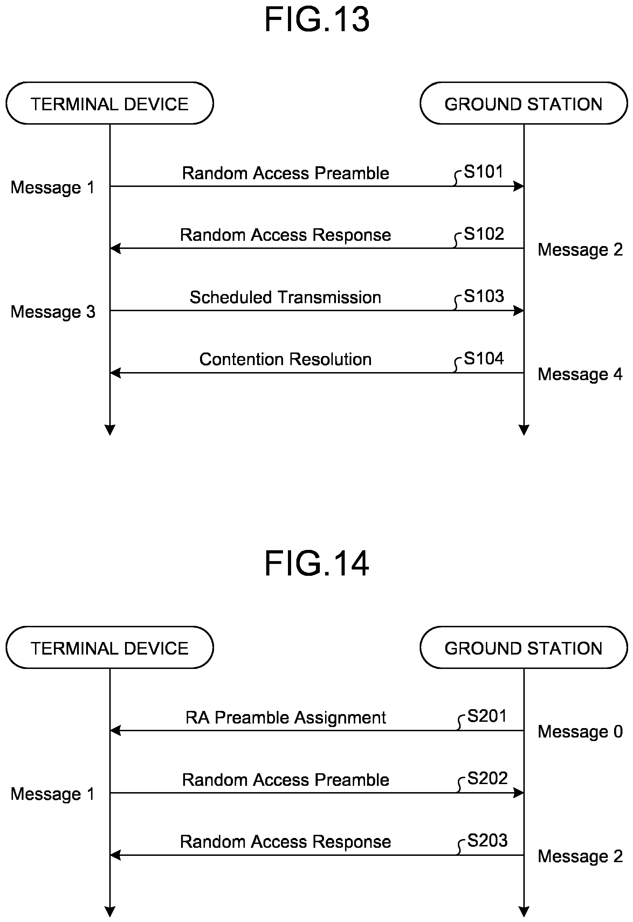

The contention-based random access procedure is a random access procedure performed on the initiative of the terminal device 40. FIG. 13 is a diagram illustrating a contention-based random access procedure. As illustrated in FIG. 13, the contention-based random access procedure is a four-step procedure starting from transmission of the random access preamble from the terminal device 40. The contention-based random access procedure includes the steps of transmitting a random access preamble (Message 1), receiving a random access response (Message 2), transmitting a message (Message 3), and receiving a contention resolution message (Message 4).

First, the terminal device 40 randomly selects a preamble sequence to be used from a plurality of predetermined preamble sequences. Then, the terminal device 40 transmits a message (Message 1: Random Access Preamble) including the selected preamble sequence to the connection destination ground station 20 (Step S101). The random access preamble is transmitted on the PRACH.

When receiving the random access preamble, the control unit 23 of the ground station 20 transmits a random access response (Message 2) to the random access preamble to the terminal device 40. This random access response is transmitted using, for example, the PDSCH. The terminal device 40 receives the random access response (Message 2) transmitted from the ground station 20 (Step S202). The random access response includes one or a plurality of random access preambles that can be received by the ground station 20 and UL (Up Link) resources (hereinafter, referred to as an uplink grant) corresponding to the random access preamble. In addition, the random access response includes a TC-RNTI (Temporary Cell Radio Network Temporary Identifier) which is an identifier unique to the terminal device 40 temporarily allocated to the terminal device 40 by the ground station 20.

Upon receiving the random access response from the ground station 20, the terminal device 40 determines whether the received information includes the random access preamble transmitted in Step S101. In a case where the random access preamble is included, the terminal device 40 extracts the uplink grant corresponding to the random access preamble transmitted in Step S101 from the uplink grants included in the random access response. Then, the terminal device 40 transmits a UL message (Message 3: Scheduled Transmission) using the resource scheduled by the extracted uplink grant (Step S103). The transmission of the message (Message 3) is performed using the PUSCH. The message (Message 3) includes an RRC message for a radio resource control (RRC) connection request. Further, the message (Message 3) includes the identifier of the terminal device 40.

In the contention-based random access procedure, a random access preamble randomly selected by the terminal device 40 is used for the procedure. Therefore, the terminal device 40 may transmit the random access preamble, and at the same time, another terminal device 40 may transmit the same random access preamble to the ground station 20. Therefore, by receiving the identifier transmitted by the terminal device 40 in Step S103, the control unit 23 of the ground station 20 recognizes between which terminal devices a preamble contention has occurred and resolves the contention. The control unit 23 transmits contention resolution (Message 4: Contention Resolution) to the terminal device 40 selected by the contention resolution. The contention resolution (Message 4) includes the identifier transmitted by the terminal device 40 in Step S103. Further, the contention resolution (Message 4) includes an RRC message of RRC connection setup. The terminal device 40 receives the contention resolution message (Message 4) transmitted from the ground station 20 (Step S104).

The terminal device 40 compares the identifier transmitted in Step S103 with the identifier received in Step S104. When the identifiers do not match, the terminal device 40 performs the random access procedure again from Step S101. When the identifiers match, the terminal device 40 performs the RRC connection operation and transitions from the idle state (RRC_IDLE) to the connected state (RRC_CONNECTED). The terminal device 40 uses the TC-RNTI acquired in Step S102 as a cell radio network temporary identifier (C-RNTI) in subsequent communication. After transitioning to the connected state, the terminal device 40 transmits an RRC message indicating RRC connection setup completion to the ground station 20. The RRC connection setup completion message is also referred to as Message 5. Through this series of operations, the terminal device 40 is connected to the ground station 20.

Note that the contention-based random access procedure illustrated in FIG. 13 is a 4-step random access procedure (4-step RACH). However, the communication system 1 can also support a two-step random access procedure (2-step RACH) as the contention-based random access procedure. For example, the terminal device 40 transmits the random access preamble and also transmits the message (Message 3) described in Step S103. Then, the control unit 23 of the ground station 20 transmits a random access response (Message 2) and a contention resolution (Message 4) as the responses. Since the random access procedure is completed in two steps, the terminal device 40 can be quickly connected to the ground station 20.

### (Non-contention-based random access procedure)

Next, a non-contention-based random access procedure will be described. The non-contention-based random access procedure is a random access procedure performed on the initiative of the base station. FIG. 14 is a diagram illustrating a non-contention-based random access procedure. The non-contention-based random access procedure is a three-step procedure starting from the transmission of the random access preamble assignment from the ground station 20. The non-contention-based random access procedure includes steps of receiving a random access preamble assignment (Message 0), transmitting a random access preamble (Message 1), and receiving a random access response (Message 2).

In the contention-based random access procedure, the terminal device 40 randomly selects a preamble sequence. However, in the non-contention-based random access procedure, the ground station 20 allocates an individual random access preamble to the terminal device 40. The terminal device 40 receives the random access preamble assignment (Message 0: RA Preamble Assignment) from the ground station 20 (Step S201).

The terminal device 40 performs random access to the ground station 20 using the random access preamble allocated in Step S301. That is, the terminal device 40 transmits the allocated random access preamble (Message 1) to the ground station 20 by the PRACH (Step S202).

The control unit 23 of the ground station 20 receives the random access preamble (Message 1) from the terminal device 40. Then, the control unit 23 transmits a random access response (Message 2: Random Access Response) to the random access preamble to the terminal device 40 (Step S303). The random access response includes, for example, information of the uplink grant corresponding to the received random access preamble. When receiving the random access response (Message 2), the terminal device 40 performs the RRC connection operation and transitions from the idle state (RRC_IDLE) to the connected state (RRC_CONNECTED).

As described above, in the non-contention-based random access procedure, since the ground station 20 schedules the random access preamble, collision of the preambles hardly occurs.

### (Details of random access procedure of NR)

The random access procedure assuming that the RAT supported by the communication system 1 is LTE has been described above. Note that the random access procedure described above can also be applied to a RAT other than LTE. Hereinafter, a random access procedure assuming that the RAT supported by the communication system 1 is NR will be described in detail. Note that, in the following description, four steps related to Message 1 to Message 4 illustrated in FIG. 13 or 14 will be described in detail. The step of Message 1 corresponds to Step S101 illustrated in FIG. 13 and Step S202 illustrated in FIG. 14. The step of Message 2 corresponds to Step S102 illustrated in FIG. 13 and Step S203 illustrated in FIG. 14. The step of Message 3 corresponds to Step S103 illustrated in FIG. 13. The step of Message 4 corresponds to Step S104 illustrated in FIG. 13.

### NR random access preamble (Message 1)

In NR, PRACH is called NR physical random access channel (NR-PRACH). The NR-PRACH is configured using a Zadoff-Chu sequence. In the NR, a plurality of preamble formats is defined as a format of the NR-PRACH. The preamble format is defined by a combination of parameters such as a subcarrier spacing, a transmission bandwidth, a sequence length, the number of symbols used for transmission, the number of transmission repetitions, a cyclic prefix (CP) length, a guard period length, and the like of the PRACH. The type of the preamble sequence of the NR-PRACH is numbered. The number of the type of the preamble sequence is referred to as a preamble index.

In the NR, configuration related to the NR-PRACH is performed on the terminal device 40 in the idle state by the system information. Furthermore, configuration related to the NR-PRACH is performed by dedicated RRC signaling for the terminal device 40 in the connected state.

The terminal device 40 transmits the NR-PRACH using a physical resource (NR-PRACH occasion) that can be transmitted by the NR-PRACH. The physical resource is indicated by a configuration related to the NR-PRACH. The terminal device 40 selects one of the physical resources and transmits the NR-PRACH. Further, when the terminal device 40 is in the connected state, the terminal device 40 transmits the NR-PRACH using the NR-PRACH resource. The NR-PRACH resource is a combination of an NR-PRACH preamble and physical resources thereof. The ground station 20 can indicate the NR-PRACH resource to the terminal device 40.

Note that the NR-PRACH is also transmitted when the random access procedure fails. When retransmitting the NR-PRACH, the terminal device 40 waits for transmission of the NR-PRACH for a standby period calculated from a backoff value (backoff indicator, BI). Note that the backoff value may be different depending on the terminal category of the terminal device 40 and the priority of the occurred traffic. At that time, notification of a plurality of backoff values is given, and the terminal device 40 selects a backoff value to be used according to the priority. Furthermore, when retransmitting the NR-PRACH, the terminal device 40 increases the transmission power of the NR-PRACH compared to the first transmission. This procedure is referred to as power ramping.

### NR random access response (Message 2)

The NR random access response is transmitted using NR physical downlink shared channel (NR-PDSCH). The NR-PDSCH including the random access response is scheduled by an NR physical downlink control channel (NR-PDCCH) in which a cyclic redundancy check (CRC) is scrambled by an RA-RNTI. The NR-PDCCH is transmitted in a common control subband. The NR-PDCCH is arranged in a common search space (CSS). Note that the value of the RA-RNTI (Random Access Radio Network Temporary Identifier) is determined based on the transmission resource of the NR-PRACH corresponding to the random access response. The transmission resources of the NR-PRACH are, for example, time resources (slots or subframes) and frequency resources (resource blocks). Note that the NR-PDCCH may be arranged in a search space associated with the NR-PRACH associated with the random access response. Specifically, the search space in which the NR-PDCCH is arranged is set in association with the preamble of the NR-PRACH and/or the physical resource in which the NR-PRACH is transmitted. The search space in which the NR-PDCCH is arranged is set in association with the preamble index and/or the index of the physical resource. The NR-PDCCH is NR-SS (NR Synchronization signal) and QCL (Quasi co-location).

The NR random access response is medium access control (MAC) information. The NR random access response includes at least an uplink grant for transmitting the NR message 3, a value of a timing advance used to adjust uplink frame synchronization, and a value of a TC-RNTI. In addition, the NR random access response includes the PRACH index used for the NR-PRACH transmission corresponding to the random access response. In addition, the NR random access response includes information related to backoff used to wait for transmission of the PRACH.

The control unit 23 of the ground station 20 transmits the random access response by the NR-PDSCH. The terminal device 40 determines whether the random access preamble has been successfully transmitted from the information included in the random access response. In a case where it is determined that the transmission of the random access preamble has failed, the terminal device 40 performs transmission processing of the NR message 3 (Message 3) according to the information included in the random access response. On the other hand, in a case where the transmission of the random access preamble has failed, the terminal device 40 determines that the random access procedure has failed, and performs the NR-PRACH retransmission process.

Note that the NR random access response may include a plurality of uplink grants for transmitting the NR message 3 (Message 3). The terminal device 40 can select one resource for transmitting a message 3 (Message 3) from a plurality of uplink grants. As a result, it is possible to alleviate the collision of the NR message 3 (Message 3) transmission in a case where the different terminal devices 40 receive the same NR random access response. As a result, the communication system 1 can provide a more stable random access procedure.

### Message 3 of NR (Message 3)

The message 3 (Message 3) of the NR is transmitted by an NR physical uplink shared channel (NR-PUSCH). The NR-PUSCH is transmitted using the resource indicated by the random access response. The message 3 of NR includes an RRC connection request message. The format of the NR-PUSCH is indicated by a parameter included in the system information. For example, the parameter determines which one of OFDM (Orthogonal Frequency Division Multiplexing) and DFT-s-OFDM (Discrete Fourier Transform Spread OFDM) is used as the format of the NR-PUSCH.

When the message 3 of the NR is normally received, the control unit 23 of the ground station 20 proceeds to a transmission process of contention resolution (Message 4). On the other hand, in a case where the message 3 of the NR cannot be normally received, the control unit 23 attempts to receive the message 3 of the NR again for at least a predetermined period.

Another example of the instruction for retransmission of the message 3 and the transmission resource includes an instruction by the NR-PDCCH used for the instruction for retransmission of the message 3. The NR-PDCCH is an uplink grant. A resource for retransmission of the message 3 is indicated by downlink control information (DCI) of the NR-PDCCH. The terminal device 40 retransmits the message 3 based on the instruction of the uplink grant.

Note that, in a case where the reception of the contention resolution of the NR is not successful within the predetermined period, the terminal device 40 regards that the random access procedure has failed, and performs the retransmission process of the NR-PRACH. Note that the transmission beam of the terminal device 40 used for retransmission of the message 3 of the NR may be different from the transmission beam of the terminal device 40 used for the first transmission of the message 3. Note that, in a case where neither the NR contention resolution instruction nor the message 3 retransmission instruction has been received within the predetermined period, the terminal device 40 regards that the random access procedure has failed, and performs the NR-PRACH retransmission process. The predetermined period is set by, for example, system information.

### Contention resolution of NR (Message 4)

The contention resolution of the NR is transmitted using the NR-PDSCH. The NR-PDSCH including contention resolution is scheduled by the NR-PDCCH in which the CRC is scrambled by the TC-RNTI or the C-RNTI. The NR-PDCCH is arranged in a user equipment specific search space (USS). Note that the NR-PDCCH may be arranged in the CSS.

When normally receiving the NR-PDSCH including the contention resolution, the terminal device 40 transmits an acknowledgment (ACK) to the ground station 20. Thereafter, the terminal device 40 regards that the random access procedure has succeeded, and shifts to the connected state (RRC_CONNECTED). On the other hand, when a negative response (NACK) to the NR-PDSCH is received from the terminal device 40 or when there is no response, the control unit 23 of the ground station 20 retransmits the NR-PDSCH including the contention resolution. In a case where the terminal device 40 cannot receive the contention resolution (Message 4) of the NR within the predetermined period, the terminal device regards that the random access procedure fails, and performs the retransmission process of the random access preamble (Message 1).

### (2-STEP RACH of NR in present embodiment)

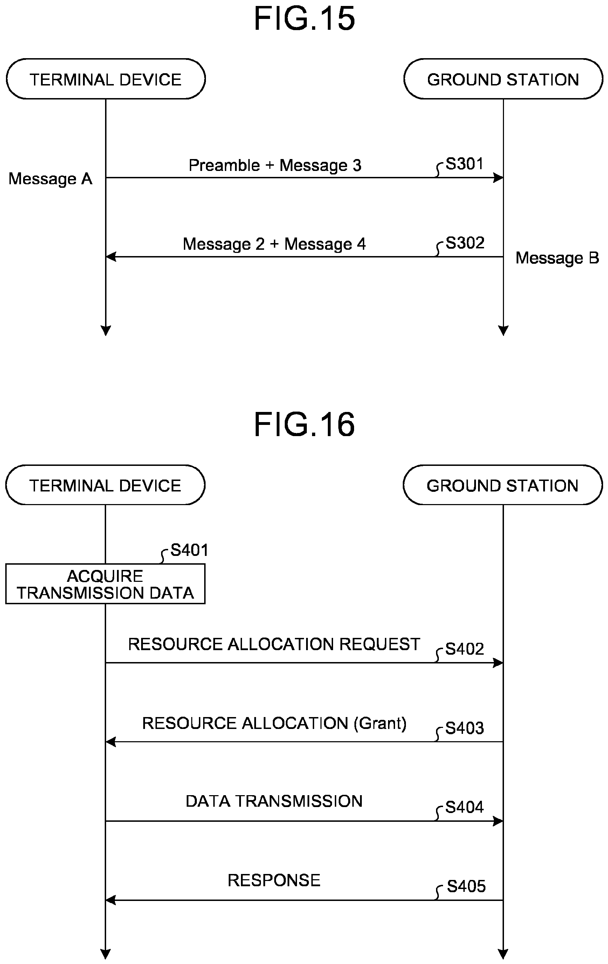

Next, an example of the 2-STEP RACH procedure (hereinafter, it is referred to as a two-step random access procedure) of NR will be described. FIG. 15 is a diagram illustrating a 2-step random access procedure. The 2-step random access procedure includes two steps of a message A (Step S301) and a message B (Step S302). As an example, the message A includes a message 1 (preamble) and a message 3 of the conventional 4-step random access procedure (4-STEP RACH procedure), and the message B includes a message 2 and a message 4 of the conventional 4-step random access procedure. Further, as an example, the message A includes a preamble (it is also referred to as PRACH) and a PUSCH, and the message B includes a PDSCH.

By adopting the two-step random access procedure, the random access procedure can be completed with a lower delay as compared with the conventional four-step random access procedure.

The preamble and the PUSCH included in the message A may be set in association with each transmission resource, or may be set by independent resources.

In a case where the transmission resources are set in association with each other, for example, in a case where the transmission resource of the preamble is determined, the transmission resource of the PUSCH that can be unique or a plurality of candidates is determined. As an example, the time and frequency offsets between the preamble of the PRACH event and the PUSCH event are defined by one value. As another example, the time and the frequency offset between the preamble of the PRACH event and the PUSCH event are set to different values for each preamble. The value of the offset may be determined by a specification, or may be semi-statically set by the ground station 20. As an example of the value of the time and frequency offset, for example, it is defined by a predetermined frequency. For example, in the unlicensed band (for example, 5 GHz band, band 45), the value of the time offset may be set to 0 or a value close to 0. Accordingly, listen before talk (LBT) can be omitted before transmission of the PUSCH.

On the other hand, in a case where the transmission resources are set as independent resources, the transmission resources of the preamble and the PUSCH may be determined in a specification, or the resources may be semi-statically set by the ground station 20, or may be determined from another information. Examples of the other information include slot format information (for example, slot format indicator or the like), band width part (BWP) information, preamble transmission resource information, a slot index (Slot Index), and a resource block index. In addition, in a case where the association between the preamble and the PUSCH constituting one message A is set by an independent resource, the base station may be notified of the association by the payload of the PUSCH or the UCI included in the PUSCH, or the base station may be notified of the association by a transmission physical parameter (for example, the scrambling sequence of the PUSCH, the DMRS sequence and/or pattern, or the transmit antenna port of the PUSCH) of the PUSCH.

In addition, the method of setting the transmission resources of the preamble and the PUSCH may be switched between a case where the transmission resources are set in association and a case where the transmission resources are set by independent resources. For example, a case where the transmission resources are set by independent resources may be applied in the licensed band, and a case where the transmission resources are set in association may be applied in the unlicensed band.

### <4-3. Transmission/reception processing (Grant Based)>

Next, transmission (uplink) of data from the terminal device 40 to the ground station 20 will be described. Uplink data transmission is divided into "transmission/reception processing (Grant Based)" and "transmission/reception processing (Configured Grant)". First, the "transmission/reception processing (Grant Based)" will be described.

The transmission/reception process (Grant Based) is a process in which the terminal device 40 receives dynamic resource allocation (Grant) from the ground station 20 and transmits data. FIG. 16 is a sequence diagram illustrating an example of transmission/reception processing (Grant Based). Hereinafter, transmission/reception processing (Grant Based) will be described with reference to FIG. 16. The transmission/reception processing (Grant Based) described below is executed, for example, in a case where the terminal device 40 is in a connected state (RRC_CONNECTED) with the ground station 20.

First, the acquisition unit 431 of the terminal device 40 acquires transmission data (Step S401). For example, the acquisition unit 431 acquires, as transmission data, data generated as data to be transmitted to another communication device (for example, the ground station 20) by various programs included in the terminal device 40.

When the acquisition unit 431 acquires the transmission data, the transmission unit 433 of the terminal device 40 transmits a resource allocation request to the ground station 20 (Step S402).

The reception unit 232 of the ground station 20 receives the resource allocation request from the terminal device 40. Then, the communication control unit 234 of the ground station 20 determines a resource to be allocated to the terminal device 40. Then, the transmission unit 233 of the ground station 20 transmits information on the resource allocated to the terminal device 40 to the terminal device 40 (Step S403).

The reception unit 432 of the terminal device 40 receives the resource information from the ground station 20 and stores the resource information in the storage unit 42. The transmission unit 433 of the terminal device 40 transmits data to the ground station 20 based on the resource information (Step S404).

The reception unit 232 of the ground station 20 acquires data from the terminal device 40. When the reception is completed, the transmission unit 233 of the ground station 20 transmits response data (for example, an acknowledgment) to the terminal device 40 (Step S405). When the transmission of the response data is completed, the ground station 20 and the terminal device 40 end the transmission/reception processing (Grant Based).

### <4-4. Transmission and reception processing (Configured Grant)>

Next, the "transmission/reception processing (Configured Grant)" will be described.

The transmission/reception process (Configured Grant) is a process of transmitting data from the terminal device 40 to the ground station 20 using configured grant transmission. Here, the configured grant transmission indicates that the communication device does not receive dynamic resource allocation (Grant) from another communication device, and the communication device transmits data using an appropriate resource from available frequency and time resources instructed in advance from another communication device. That is, the configured grant transmission indicates that the data transmission is performed without including the grant in the DCI. The configured grant transmission is also referred to as data transmission without grant, grant-free, semi-persistent scheduling, or the like.

In the case of the configured grant transmission, the ground station 20 specifies candidates of frequency and time resources selectable by the terminal device 40 in advance. A main purpose of this is power saving of the terminal device 40 and low latency communication by reducing signaling overheads.

In the grant-based transmission/reception process, the ground station 20 notifies the terminal device 40 of resources used in the uplink and the sidelink. As a result, the terminal device 40 can communicate without causing resource contention with the other terminal devices 40. However, in this method, signaling overhead due to notification occurs.

In the configured grant transmission, the processing of Step S402 and Step S403 in the example of FIG. 16 can be reduced. Therefore, configured grant transmission that does not perform resource allocation notification is considered as a promising technology candidate in power saving and low-latency communication required in next-generation communication. Note that the transmission resources in the configured grant transmission may be selected from all available bands or may be selected from resources designated in advance from the ground station 20.

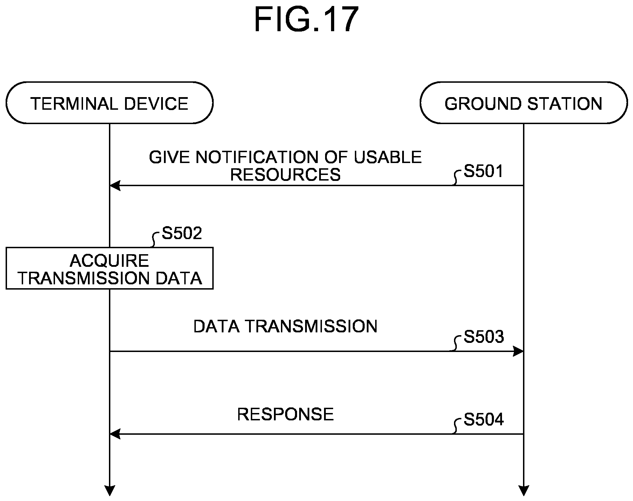

FIG. 17 is a sequence diagram illustrating an example of transmission/reception processing (Configured Grant). Hereinafter, transmission/reception processing (Configured Grant) will be described with reference to FIG. 17. The transmission/reception processing (Configured Grant) described below is executed, for example, in a case where the terminal device 40 is in a connected state (RRC_CONNECTED) with the ground station 20.

When the terminal device 40 is in the connected state, the communication control unit 234 of the ground station 20 determines a resource to be allocated to the terminal device 40. Then, the transmission unit 233 of the ground station 20 transmits information on the resource allocated to the terminal device 40 to the terminal device 40 (Step S501).

The reception unit 432 of the terminal device 40 receives the resource information from the ground station 20 and stores the resource information in the storage unit 22. Then, the acquisition unit 431 of the terminal device 40 acquires the generated transmission data (Step S502). For example, the acquisition unit 431 acquires, as transmission data, data generated as data to be transmitted to another communication device by various programs included in the terminal device 40.

Then, the transmission unit 433 of the terminal device 40 transmits data to the ground station 20 based on the resource information (Step S503).

The reception unit 232 of the ground station 20 receives data from the terminal device 40. When the reception is completed, the transmission unit 233 of the ground station 20 transmits response data (for example, an acknowledgment) to the terminal device 40 (Step S504). When the transmission of the response data is completed, the ground station 20 and the terminal device 40 end the transmission/reception processing (Configured Grant).

### <<5. Switching of ground station>>

The basic operation of the communication system 1 has been described above. Next, switching of the ground station 20 will be described.

In the following description, when a specific example is shown, there is a portion where a specific value is shown and described, but the value does not depend on the example, and another value may be used.

Further, in the following description, the resource indicates, for example, frequency, time, resource element (including REG, CCE, CORESET), resource block, bandwidth part, component carrier, symbol, sub-symbol, slot, mini-slot, subslot, subframe, frame, PRACH occasion, occasion, code, multi-access physical resource, multi-access signature, subcarrier spacing (numerology), or the like. Of course, the resources are not limited to these examples.

In addition, in the following description, the ground station 20 can be read as a base station or a gateway.

Furthermore, the satellite station 30 in the following description can be replaced with a non-ground base station device that operates as a communication device, such as a drone, a balloon, or an airplane. Furthermore, the present technology is not limited thereto, and can also be applied to communication between the ground base station device and the terminal device.

### <5-1. Outline of processing>

First, an outline of processing related to switching of the ground station 20 will be described.

The communication system 1 is a transparent (bent-pipe)-type mobile satellite communication system. The terminal device 40 included in the communication system 1 communicates with the satellite station 30. The satellite station 30 is a non-geostationary satellite, and reflects, amplifies, and frequency-converts radio waves from the ground station 20 or the terminal device 40.

The satellite station 30 switches the connection from the connected ground station 20 to another ground station 20. In the present embodiment, it is assumed that the connection destination ground station 20 is switched while the satellite station 30 with which the terminal device 40 communicates remains the same.

In order to smoothly switch the ground station 20, the terminal device 40 acquires information (hereinafter, the information is referred to as necessary information) necessary for switching the connection destination ground station before switching processing of the ground station 20. The necessary information is, for example, information (for example, various setting values for connection to the ground station 20) necessary for transmission and reception of data. The necessary information may be two or more setting values. The terminal device 40 holds the acquired necessary information.

The terminal device 40 switches the connection destination ground station 20 based on the necessary information. For example, the terminal device 40 switches the setting value to be used to another setting value based on the switching notification from the ground station 20 or the satellite station 30. At this time, the terminal device 40 may switch the setting value based on RRC signaling (RRC signaling), DCI, or the like.

Hereinafter, details of processing related to switching of the ground station 20 will be described.

### <5-2. Example of necessary information>

First, an example of the necessary information will be described. The necessary information is information necessary for switching the connection destination ground station 20. The communication control unit 434 of the terminal device 40 executes processing related to switching of the ground station 20 based on the necessary information. The terminal device 40 realizes smooth switching by acquiring necessary information in advance before the switching processing.

Note that notification of the necessary information may be given not only to the terminal device 40 but also to the satellite station 30 and/or the switching destination ground station 20. For example, notification of the necessary information is given from the ground station 20 as the switching source to the terminal device 40, the satellite station 30, and/or the switching destination ground station 20.

The following (1) to (3) are conceived as the necessary information. The necessary information may include a plurality of pieces of information described below.

### (1) Information related to switching of ground station 20

As the necessary information, information related to switching used at the time of switching processing is conceived. Here, the switching process is, for example, handover from the switching source ground station 20 to the switching destination ground station 20. The following (1-1) to (1-5) are conceived as the information related to the switching.

### (1-1) Trigger information

As the information related to the switching, information related to a trigger for performing the switching of the ground station 20 is conceived. As specific examples of the information related to the trigger, position information, time, orbit information, altitude information, and time information necessary for making one round of the earth of the satellite station 30 are conceived. Furthermore, information related to reception quality is conceived as the information related to the trigger. The information related to the reception quality is, for example, reference signal received power (RSRP) or reference signal received quality (RSRQ). The terminal device 40 starts the switching processing (for example, handover) when the condition indicated by the information related to the trigger is satisfied. For example, when the position of the satellite station 30 being connected reaches the position indicated by the information related to the trigger, the terminal device 40 may execute switching processing of the ground station 20. In addition, the terminal device 40 may execute switching processing of the ground station 20 when the communication quality with the ground station 20 is lower than the reception quality indicated by the information related to the trigger. The terminal device 410 grasps the trigger for switching the ground station 20 in advance, thereby implementing smooth switching of the ground station 20.

### (1-2) Group identification information

As the information related to switching, group identification information common to a plurality of terminal devices 40 connected to the satellite station 30 (non-geostationary satellites) is conceived. In this case, the terminal device 40 switches the connection destination ground station based on information common to the plurality of terminal devices 40 obtained using the group identification information. As a specific example of the group identification information, a Group-RNTI for UE-Common DCI for performing switching of the ground station 20 is conceived. In the case of satellite communication, it is assumed that switching occurs in many terminal devices 40 at a time. However, at this time, if many terminal devices 40 communicate with the ground station 20 using identification information different one by one, the switching of the ground station 20 may not proceed smoothly. However, since many terminal devices 40 use the common identification information, even if switching occurs in many terminal devices 40 at a time, smooth switching of the ground station 20 is realized.

### (1-3) Switching destination information or switching order information

As the information related to the switching, information related to the switching destination of the ground station 20 (hereinafter, it is referred to as switching destination information) is conceived. In this case, the terminal device 40 executes the switching process with the ground station 20 indicated by the switching destination information as the switching destination ground station 20. Furthermore, as the information related to switching, information related to the switching order of the ground stations 20 (hereinafter, it is referred to as switching order information) is conceived. In this case, the terminal device 40 executes the switching process with the ground station 20 specified by the switching order information as the switching destination ground station 20. The terminal device 40 grasps the switching destination in advance, thereby implementing smooth switching of the ground station 20.

### (1-4) Timer information

As the information related to the switching, timer information until the switching of the ground station 20 is performed is conceived. In this case, for example, after receiving the switching notification from the ground station 20, the terminal device 40 waits until the timing indicated by the timer information and executes the switching processing. By controlling the switching timing, smooth switching is realized as the entire system.

### (1-5) Communication stop information

As the information related to the switching, information related to a communication stop during the switching of the ground station 20 is conceived. As a specific example of the information related to the communication stop, information related to whether the transmission/reception stop is performed during the switching of the ground station 20 is conceived. In a case where it is determined that the transmission/reception stop is performed, the terminal device 40 executes the stop of the transmission/reception during the execution of the switching processing. Furthermore, as a specific example of the information related to the communication stop, information related to an implementation period of transmission/reception stop during switching of the ground station 20 is conceived. In this case, the terminal device 40 stops transmission and reception for a period indicated by this information during switching of the ground station 20. Since the presence or absence of the stop of transmission and reception and the period are known in advance, the terminal device 40 can smoothly transmit and receive data even when the ground station 20 is switched.

### (2) Information related to communication parameter of switching destination ground station 20

As the necessary information, information (hereinafter, the parameter information is referred to as parameter information) related to the communication parameters of the switching destination ground station 20 is conceived. The communication parameter is, for example, a transmission parameter used when data is transmitted to the switching destination ground station 20.

As the parameter information, for example, information related to the timing advance of the switching destination ground station 20, information related to synchronization of the transmission timing of the switching destination ground station 20, a terminal unique ID (C-RNTI) of the switching destination ground station 20, and information related to the band of the switching destination ground station 20 are conceived.

The terminal device 40 communicates with the switching destination ground station 20 based on the parameter information. Since the communication parameter for communicating with the switching destination ground station 20 is acquired in advance, the terminal device 40 can smoothly switch the ground station 20.

### (3) Information required for random access fallback

Examples of the necessary information include information necessary for random access fallback after switching of the ground station 20. The random access fallback refers to performing random access and connecting to the ground station 20 when switching of the ground station 20 fails.

Examples of the information required for the random access fallback include the following (a) to (f).
(a) PRACH transmission resource of switching destination ground station 20
(b) Preamble sequence of the switching destination ground station 20
(c) Cell ID of switching destination ground station 20
(d) Uplink/downlink carrier frequency of the ground station 20 to which switching is performed
(e) Bandwidth of the switching destination ground station 20
(f) Radio resource configuration of the switching destination ground station 20

In a case where the switching of the ground station 20 has failed, for example, in a case where the handover has failed, or in a case where the data transmission after the handover has failed, the terminal device 40 performs random access to the switching destination ground station 20 based on the above information. As a result, the terminal device 40 can smoothly switch the ground station 20.

### <5-3. Notification means for necessary information>

Next, notification means for the necessary information will be described.

For example, the transmission unit 233 of the ground station 20 or the transmission unit 333 of the satellite station 30 may notify the terminal device 40 of the necessary information. The acquisition unit 431 of the terminal device 40 acquires necessary information transmitted from the ground station 20 or the satellite station 30. The acquisition unit 331 of the satellite station 30 may acquire the necessary information transmitted by the ground station 20.

The following (1) to (4) are conceived as notification means of the necessary information.

### (1) Semi-static notification

Notification of the necessary information is semi-statically given during or after the initial connection between the ground station 20 and the terminal device. For example, notification of the necessary information is given at the following timings or by the following means (a) to (d) .
(a) Message at the fourth step of the 4-step random access procedure
(b) For example, the message of the second step of the 4-step random access procedure
(c) RRC signaling after random access procedure
(d) System information

The information notification of which is given semi-statically may be various types of configuration information for communicating with the switching destination ground station 20. The configuration information may be a communication parameter. Note that the information notification of which is given semi-statically may be configuration information related to all the ground stations 20 to which the terminal device 40 is likely to be connected. Furthermore, the information notification of which is given semi-statically may be configuration information related to two or more ground stations 20.

The configuration information may include an initial value and other setting values. At this time, the terminal device 40 first uses the initial value. Then, when receiving the switching notification from the ground station 20 or the satellite station 30, the terminal device 40 changes the setting value to a setting value other than the initial value.

### (2) Switching by dynamic notification of information notification of which is semi-statically given

The terminal device 40 may switch the necessary information notification of which is semi-statically given by dynamic notification. The dynamic notification is executed by, for example, the ground station 20 or the satellite station 30. For example, the terminal device 40 switches to one setting value among the configuration information notification of which is semi-statically given by DCI, a MAC control element (MAC CE), RRC signaling, or the like.

Note that the dynamic notification may be a UE-specific notification. The UE is an abbreviation of user equipment, and is, for example, the terminal device 40 in the present embodiment. Note that the dynamic notification may be multicast or broadcast. In addition, the dynamic notification may be substituted by another notification such as paging.

Note that notification of some information of the configuration information described in the description of the semi-static notification may be given together with the dynamic notification.

After receiving the dynamic notification, the terminal device 40 may perform a random access procedure with the switching destination ground station 20.

### (3) Switching of information notification of which is semi-statically given based on trigger

The terminal device 40 may switch the necessary information notification of which is semi-statically given based on the trigger information notification of which is given in advance. The trigger information may be time information. For example, the terminal device 40 acquires time information indicating a switching timing of the configuration information in advance from the ground station 20 or the satellite station 30. When the time indicated by the time information comes, the terminal device 40 switches the configuration information to be used to other configuration information corresponding to the switching destination ground station 20.

### (4) Specific examples of semi-static notification and dynamic notification

The semi-static notification and/or the dynamic notification are any of a UE-specific notification, a multicast notification, and a broadcast notification. For example, the semi-static notification and/or the dynamic notification are UE-specific DCI, UE-common DCI, UE-specific RRC signaling, UE-common RRC signaling, and system information.

### <5-4. Switching notification>

The satellite station 30 or the ground station 20 notifies the terminal device 40 of the switching of the configuration information. Note that, in the following description, the configuration information switching notification is simply referred to as a switching notification. Various timings can be adopted as the execution timing of the switching notification.

For example, in consideration of a propagation path delay between the ground station 20, the satellite station 30, and the terminal device 40 and retransmission of the DCI, the satellite station 30 or the ground station 20 gives the ground station 20 switching notification at a time earlier by the propagation path delay so that the switching timing of the ground station 20 and the timing at which the terminal receives the switching notification become the same time. At this time, the satellite station 30 or the ground station 20 may determine the notification execution timing in consideration of the ACK/NACK transmission time of the terminal device 40, the time required for retransmission of the notification, and/or the time of the repeated notification (Repetition).

In addition, the satellite station 30 or the ground station 20 may execute the ground station 20 switching notification at a timing at which the terminal device 40 can receive the time equivalent to the timer information until the ground station 20 is switched.

Note that the satellite station 30 and the terminal device 40 may be simultaneously connected to the plurality of ground stations 20 when the ground stations 20 are switched. At this time, the satellite station 30 or the ground station 20 transmits a switching notification to the terminal device 40 so that the terminal device 40 can switch the ground station 20 while being simultaneously connected to the plurality of ground stations 20.

Furthermore, the switching notification may instruct the satellite station 30 to switch the configuration information when reaching a predetermined position. At this time, when the satellite station 30 comes to the predetermined position notification of which is given, the terminal device 40 performs switching.

### <5-5. Processing of terminal device after switching notification>

When receiving the ground station 20 switching notification, the terminal device 40 and/or the satellite station 30 changes the setting of the ground station 20 as the switching source to the setting of the switching destination ground station 20. In the following description, the switching source ground station 20 may be referred to as a ground station A, and the switching destination ground station 20 may be referred to as a ground station B.

Note that, in a case where notification of the timer information is given as the information related to switching, the terminal device 40 and/or the satellite station 30 may switch the configuration information after a time indicated by the timer information. After receiving the switching notification (for example, DCI notification or the like), the terminal device 40 and/or the satellite station 30 changes the communication parameter to the setting of the ground station B after a slot for a designated time or a symbol elapses.

Furthermore, the switching setting of the ground station 20 may overlap with some parameters. For example, when the terminal device 40 switches the setting from the connection of the ground station A to the setting of the ground station B, the terminal device 40 may receive the DCI using both the C-RNTI set by the ground station A and the C-RNTI set by the ground station B.

Note that, when the terminal device 40 switches the ground station 20, a section in which transmission and reception is not performed may be provided as viewed from the terminal device 40. For example, when the ground station A is switched to the ground station B, the propagation distance may become longer at the time of switching. In that case, since the terminal device 40 needs to shift the transmission timing further forward, there is a case where transmission and reception cannot be performed immediately after switching. Therefore, it may be necessary to provide a section in which transmission and reception are not performed. At this time, the satellite station 30 may not transmit and receive data during a time necessary for switching the ground station 20.

Note that transmission and reception of data may not be performed based on the determination of the terminal device 40. The necessary information may include information on the propagation distance to the switching destination ground station 20. Then, the terminal device 40 may not transmit data for a predetermined period at the time of switching the ground station 20 based on the information related to the propagation distance.

In addition, the terminal device 40 may perform downlink synchronization or random access with the ground station B after the setting change. For example, it is conceived that the terminal device 40 fails to transmit data after setting switching. Furthermore, it is conceived that the terminal device 40 receives a notification of fallback to random access from the satellite station 30 or the ground station 20. In this case, the terminal device 40 may fall back to random access. The random access performed in this case may be contention-based random access, or may be non-contention-based (contention-free) random access.

In a case where the random access is non-contention-based random access, notification of information necessary for the random access may be given to the terminal device 40 in advance as necessary information. In this case, since the terminal device 40 performs random access based on information notification of which is given in advance, it is possible to avoid collision with another terminal device 40. As a result, it is possible to smoothly switch the ground station 20.

Note that the terminal device 40 may perform random access when the downlink/uplink frequency changes.

### <5-6. Notification means between satellite station and ground station>

The necessary information notification of which is given to the terminal device 40 may be shared not only by the terminal device but also by the satellite station 30 and the ground station or the ground station 20 after switching. The ground station A is the ground station 20 before switching, and the ground station B is the ground station 20 after switching.

At this time, the satellite station 30, the ground station A, and/or the ground station B may generate the necessary information. Then, notification of the generated necessary information may be given to the terminal device 40, the satellite station 30, the ground station A, and/or the ground station B.

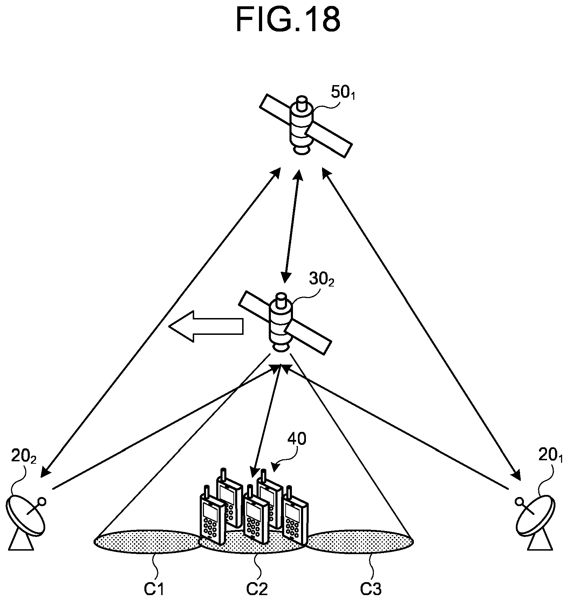

Note that another satellite station that is not directly involved in the switching of the ground station 20 may notify the satellite station 30 and the ground station 20 that are directly involved in the switching of the ground station 20 of the necessary information. FIG. 18 is an example of a case where another satellite station participates in notification of necessary information. In the example of FIG. 18, the ground station 20₁ is a ground station (ground station A) before switching, and the ground station 20₂ is a ground station (ground station B) after switching. Furthermore, the satellite station 30₂ is a satellite station (hereinafter, the satellite station is referred to as a satellite station A) directly involved in switching of the ground station 20, and is another satellite station 50 (hereinafter, the satellite station is referred to as a satellite station B) not directly involved in switching of the ground station 20. In the example of FIG. 18, the satellite station A is a non-geostationary satellite, and the satellite station B is a geostationary satellite.

In the example of FIG. 18, the ground station A, the satellite station A, and the terminal device 40 transmit and receive data, and the satellite station A switches the ground station 20 to be connected from the ground station A to the ground station B. Furthermore, in the example of FIG. 18, there is another satellite station B that is not directly involved in switching, and can communicate with the ground station A, the ground station B, and the satellite station A. In a case where it is assumed that the ground station A and the ground station B are not connected by, for example, a wired backhaul and cannot communicate with each other, a means for sharing information between the ground station A and the ground station B is a problem. Although it is conceivable to share information via the satellite station A, the satellite station A is constantly moving on orbit, and may not be able to simultaneously communicate with the ground station A and the ground station B. Therefore, since the ground station A, the ground station B, and the satellite station B (for example, a geostationary earth orbiting satellite) capable of constantly communicating with the satellite station A notify these devices of necessary information, it is possible to stably provide a communication link between the ground station 20 and the satellite station 30.

In addition, the satellite station 30 and the ground station 20 may notify each other of the switching notification by trigger information for performing switching of the ground station 20. As the notification, notification from a satellite to the ground station 20 and notification from the ground station 20 to a satellite are conceivable. For example, the satellite station 30 receives a trigger related to switching from the ground station 20 in advance, and notifies the ground station 20 when detecting the trigger. Further, the satellite station 30 may measure a reference signal capable of measuring a channel state from the ground station 20, and may notify switching of the ground station 20 when the reference signal becomes equal to or less than a predetermined value.

### <<6. Sequence example>>

Although the switching of the ground station 20 has been described above, a sequence example of the switching process performed by the communication system 1 will be described below. In the following description, the ground station 20 before switching is referred to as a ground station A, and the ground station 20 after switching is referred to as a ground station B.

### <6-1. Sequence example 1>

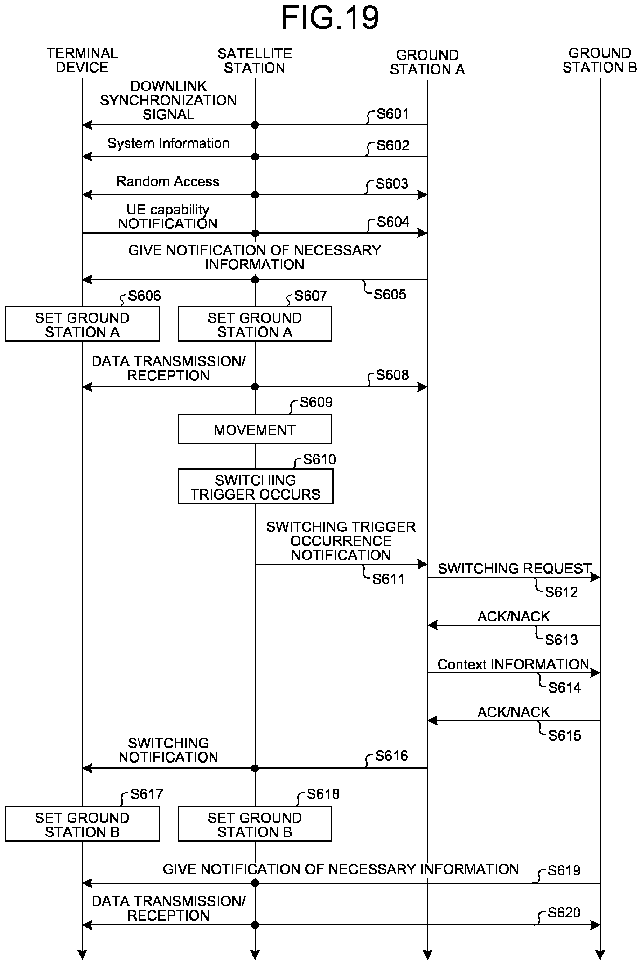

FIG. 19 is a diagram illustrating Sequence Example 1 of the switching processing. This sequence is a case where the switching trigger of the ground station 20 is performed on the initiative of the satellite station 30.

First, the terminal device 40 performs downlink synchronization with the ground station A and the satellite station 30 (Step S601), and acquires system information (Step S602). Then, the terminal device 40 performs random access (Step S603), and performs uplink synchronization with the satellite station 30 and the ground station A. The terminal device 40 notifies the satellite station 30 and the ground station A of capability information (hereinafter, it is simply referred to as capability information) of the terminal device 40 during or after random access (Step S604).

The satellite station 30 and/or the ground station A notify necessary information (Step S605). At this time, the satellite station 30 and/or the ground station A notifies both of the information necessary for transmission and reception with the ground station A and the ground station B. In addition, the satellite station 30 notifies the terminal device 40 of a notification that the ground station 20 to be connected first is the ground station A or an initial value.

The terminal device 40 and the satellite station 30 set information of the ground station A included in the necessary information (Steps S606 and S607). Then, the terminal device 40 transmits and receives data to and from the satellite station 30 and the ground station A (Step S608) .

The satellite station 30 always moves on orbit (Step S609), and detects whether a ground station switching trigger occurs. When the switching trigger occurs (Step S610), the satellite station 30 notifies the ground station A of the occurrence of the switching trigger (Step S611). In the present sequence example, the satellite station 30 performs the detection of the trigger, but the ground station 20 or the terminal device 40 may perform the detection of the switching trigger.

The ground station A sends a request for switching the ground station 20 to the switching destination ground station B (Step S612). In response to the request, the ground station B transmits ACK/NACK (Step S613). In the present sequence example, it is assumed that the response transmitted by the ground station B is an ACK.

In addition, the ground station A notifies the ground station B of the held context information (Step S614). The ground station B transmits ACK/NACK for the notification (Step S615). In the present sequence example, it is assumed that the response transmitted by the ground station B is an ACK.

The ground station A notifies the satellite station 30 and the terminal device 40 of switching of the ground station 20 (Step S616). The satellite station 30 and the terminal device 40 that have received the notification switch to the ground station B setting (Steps S617 and S618). Here, the ground station B may notify necessary information (Step S619).

The ground station B, the satellite station 30, and the terminal device 40 continue to transmit and receive data using the ground station B setting (Step S620).

### <6-2. Sequence example 2>

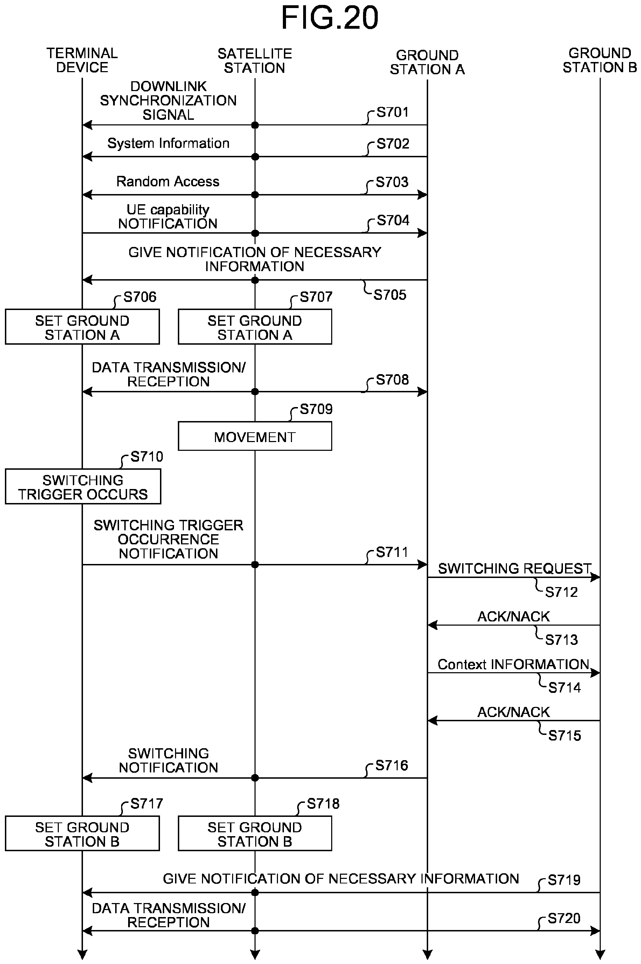

FIG. 20 is a diagram illustrating Sequence Example 2 of the switching processing. This sequence example is a case where the switching trigger of the ground station 20 is performed on the initiative of the terminal device 40.

First, the terminal device 40 performs downlink synchronization with the ground station A and the satellite station 30 (Step S701), and acquires system information (Step S702). Then, the terminal device 40 performs random access (Step S703), and performs uplink synchronization with the satellite station 30 and the ground station A. The terminal device 40 notifies the satellite station 30 and the ground station A of the capability information during or after random access (Step S704).

The satellite station 30 notifies the terminal device 40 of necessary information (Step S705). At this time, the satellite station 30 notifies both of information necessary for transmission and reception with the ground station A and the ground station B. In addition, the satellite station 30 notifies the terminal device 40 of a notification that the ground station 20 to be connected first is the ground station A or an initial value.

The terminal device 40 and the satellite station 30 set information of the ground station A included in the necessary information (Steps S706 and S707). Then, the terminal device 40 transmits and receives data to and from the satellite station 30 and the ground station A (Step S708).

The satellite station 30 is always moving on the orbit (Step S709), and detects whether a switching trigger of the ground station 20 occurs. When the switching trigger occurs (Step S710), the terminal device 40 notifies the satellite station 30 and the ground station A of the occurrence of the switching trigger (Step S711). In the present sequence example, the terminal device 40 performs the detection of the trigger, but the ground station 20 or the satellite station 30 may perform the detection of the switching trigger.

The ground station A sends a request for switching the ground station 20 to the switching destination ground station B (Step S712). In response to the request, the ground station B transmits ACK/NACK (Step S713). In the present sequence example, it is assumed that the response transmitted by the ground station B is an ACK.

In addition, the ground station A notifies the ground station B of the held context information (Step S714). The ground station B transmits ACK/NACK for the notification (Step S715). In the present sequence example, it is assumed that the response transmitted by the ground station B is an ACK.

The ground station A notifies the satellite station 30 and the terminal device 40 of switching of the ground station 20 (Step S716). The satellite station 30 and the terminal device 40 that have received the notification switch to the ground station B setting (Steps S717 and S718). Here, the ground station B may notify necessary information (Step S719).

The ground station B, the satellite station 30, and the terminal device 40 continue to transmit and receive data using the ground station B setting (Step S720).

### <6-3. Sequence example 3>

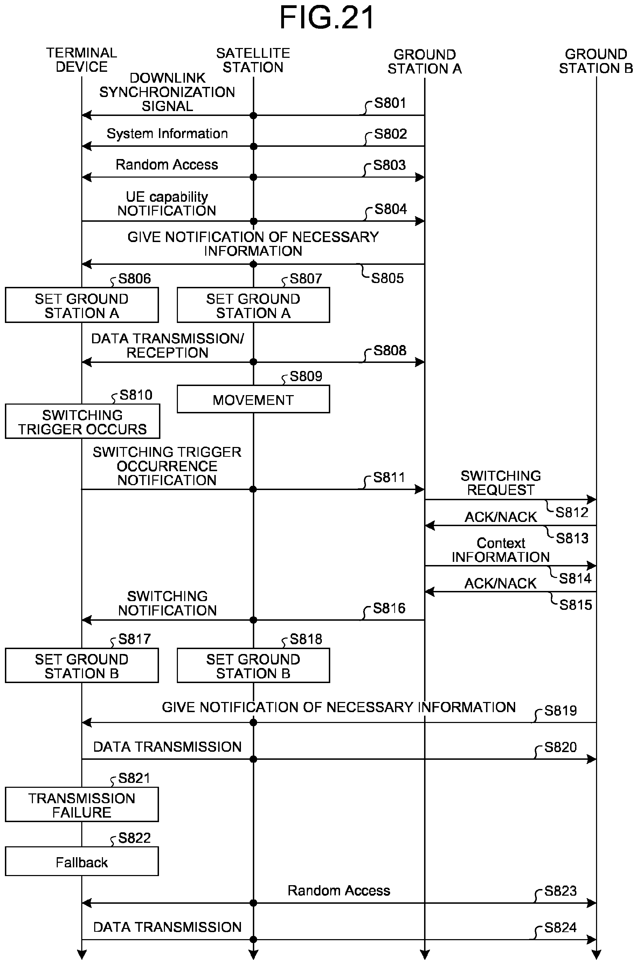

FIG. 21 is a diagram illustrating Sequence Example 3 of the switching processing. This sequence is a case where fallback to random access occurs after switching of the ground station 20.

First, the terminal device 40 performs downlink synchronization with the ground station A and the satellite station 30 (Step S801), acquires system information (Step S802), and then, the terminal device 40 performs random access (Step S803), and performs uplink synchronization with the satellite station 30 and the ground station A. The terminal device 40 notifies the satellite station 30 and the ground station A of the capability information during or after random access (Step S804).

The satellite station 30 notifies the terminal device 40 of necessary information (Step S805). At this time, the satellite station 30 notifies both of information necessary for transmission and reception with the ground station A and the ground station B. In addition, the satellite station 30 notifies the terminal device 40 of a notification that the ground station 20 to be connected first is the ground station A or an initial value. The necessary information includes information necessary for random access fallback.

The terminal device 40 and the satellite station 30 set information of the ground station A included in the necessary information (Steps S806 and S807). Then, the terminal device 40 transmits and receives data to and from the satellite station 30 and the ground station A (Step S808).

The satellite station 30 is always moving on orbit (Step S809), and detects whether a switching trigger for the ground station 20 occurs. When the switching trigger occurs (Step S810), the terminal device 40 notifies the satellite station 30 and the ground station A of the occurrence of the switching trigger (Step S811). In the present sequence example, the terminal device 40 performs the detection of the trigger, but the ground station 20 or the satellite station 30 may perform the detection of the switching trigger.

The ground station A sends a request for switching the ground station 20 to the switching destination ground station B (Step S812). In response to the request, the ground station B transmits ACK/NACK (Step S813). In the present sequence example, it is assumed that the response transmitted by the ground station B is an ACK.

The ground station A notifies the ground station B of the held context information (Step S814). The ground station B transmits ACK/NACK for the notification (Step S815). In the present sequence example, it is assumed that the response transmitted by the ground station B is an ACK.

The ground station A notifies the satellite station 30 and the terminal device 40 of switching of the ground station 20 (Step S816). The satellite station 30 and the terminal device 40 that have received the notification switch to the ground station B setting (Steps S817 and S818). Here, the ground station B may notify necessary information (Step S819).

The ground station B, the satellite station 30, and the terminal device 40 continue to transmit and receive data using the ground station B setting (Step S820). Here, in the present sequence example, it is assumed that data transmission has failed.

When the data transmission fails (Step S821), the terminal device 40 performs random access based on the received information necessary for the random access fallback (Step S822).

After the random access procedure is completed (Step S823), the terminal device 40 performs communication with the ground station B again (Step S824).

### <6-4. Sequence example 4>

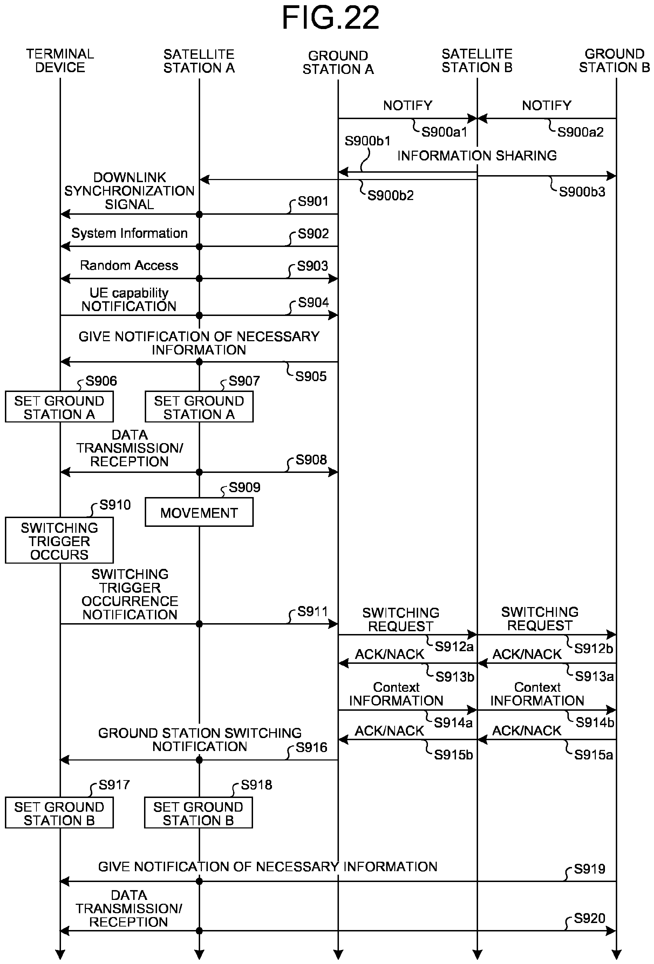

FIG. 22 is a diagram illustrating Sequence Example 4 of the switching processing. This sequence is a case where another satellite station 50 not involved in the switching of the ground station 20 notifies the satellite station 30 and the ground station 20 involved in the switching of the ground station 20 of information. Another satellite station 50 is typically a geostationary satellite, but may be a non-geostationary satellite. In the following description, the satellite station 30 involved in the switching of the ground station 20 is referred to as a satellite station A, and another satellite station 50 not involved in the switching of the ground station 20 is referred to as a satellite station B.

First, the satellite station B acquires information necessary for transmission and reception with each ground station 20 from the ground station A and the ground station B (Steps S900a1 and S900a2). Then, the satellite station B notifies the satellite station A, the ground station A, and/or the ground station B of the acquired information necessary for transmission and reception with the ground station A and the ground station B (Steps S900b1, S900b2, and S900b3). Note that, in the present sequence example, the satellite station B performs these operations in advance prior to the switching processing, but may perform these operations at any timing regardless of this.

Next, the terminal device 40 synchronizes the downlink with the ground station A and the satellite (Step S901), and acquires system information (Step S902). Then, the terminal device 40 performs random access (Step S903), and performs uplink synchronization with the satellite and the ground station A. The terminal device 40 notifies the satellite and the ground station A of the capability information during or after random access (Step S904).

The satellite station A notifies the terminal device 40 of necessary information (Step S905). At this time, the satellite station A notifies both the ground station A and the ground station B of information necessary for transmission and reception. In addition, the satellite station A notifies the terminal device 40 of a notification that the ground station 20 to be connected first is the ground station A or an initial value.

The terminal device 40 and the satellite station A set information of the ground station A included in the necessary information (Steps S906 and S907). Then, the terminal device 40 transmits and receives data to and from the satellite and the ground station A (Step S908).

The satellite station A is always moving on the orbit (Step S909), and detects whether a switching trigger for the ground station 20 occurs. When the switching trigger of the ground station 20 occurs (Step S910), the terminal device 40 notifies the satellite station A and the ground station A of the occurrence of the switching trigger (Step S911). In the present sequence example, the terminal device 40 performs the detection of the trigger, but the ground station 20 or the satellite station A may perform the detection of the switching trigger.

The ground station A relays the satellite station B and sends a request for switching the ground station 20 to the switching destination ground station B (Steps S912a and S912b). In response to the request, the ground station B relays the satellite station B and transmits ACK/NACK (Steps S913a and S913b). In the present sequence example, it is assumed that the response transmitted by the ground station B is an ACK.

The ground station A relays the held context information to the satellite station B and notifies the ground station B of the context information (Steps S914a and S914b). The ground station B transmits ACK/NACK for the notification via the satellite station B (Steps S915a and S915b). In the present sequence example, it is assumed that the response transmitted by the ground station B is an ACK.

The ground station A notifies the satellite station A and the terminal device 40 of switching of the ground station 20 (Step S90). The satellite station A and the terminal device 40 that have received the notification switch to the ground station B setting (Steps S907 and 5918). Here, information required for transmission and reception at the time of switching the ground station 20 may be updated (Step S919).

The ground station B, the satellite station A, and the terminal device 40 continue to transmit and receive data using the ground station B setting (Step S920).

### <<7. Modification>>

The above-described embodiments are examples, and various modifications and applications are possible.

For example, in the above-described embodiment, the terminal device 40 communicates with the ground station 20 via the satellite station 30, but the terminal device 40 may communicate with the ground station 20 via an aircraft station. In this case, the satellite station 30 appearing in the above-described embodiment may be replaced with an aircraft station. In addition, the satellite station 30 appearing in the above-described embodiment can be read as a non-ground station (non-ground base station).

Furthermore, the terminal device 40 may communicate with the ground station 20 via a ground station (ground base station). In this case, the satellite station 30 appearing in the above-described embodiment may be replaced with a ground station. The ground station may include a terminal device. In addition, the satellite station 30 appearing in the above-described embodiments can be read as a base station, a terminal device, or a relay station.

The control device that controls the management device 10, the ground station 20, the satellite station 30, and the terminal device 40 of the present embodiment may be realized by a dedicated computer system or a general-purpose computer system.

For example, a communication program for executing the above-described operation is stored and distributed in a computer-readable recording medium such as an optical disk, a semiconductor memory, a magnetic tape, or a flexible disk. Then, for example, the program is installed in a computer, and the above-described processing is executed to configure the control device. At this time, the control device may be a device (for example, a personal computer) outside the management device 10, the ground station 20, the satellite station 30, and the terminal device 40. Furthermore, the control device may be a device (for example, the control unit 13, the control unit 23, the control unit 33, and the control unit 43) inside the management device 10, the ground station 20, the satellite station 30, and the terminal device 40.

In addition, the communication program may be stored in a disk device included in a server device on a network such as the Internet so that the communication program can be downloaded to a computer. In addition, the above-described functions may be realized by cooperation of an operating system (OS) and application software. In this case, a portion other than the OS may be stored in a medium and distributed, or a portion other than the OS may be stored in a server device and downloaded to a computer.

Among the processes described in the above embodiments, all or a part of the processes described as being performed automatically can be performed manually, or all or a part of the processes described as being performed manually can be performed automatically by a known method. In addition, the processing procedure, specific name, and information including various data and parameters illustrated in the document and the drawings can be arbitrarily changed unless otherwise specified. For example, the various types of information illustrated in each figure are not limited to the illustrated information.

In addition, each component of each device illustrated in the drawings is functionally conceptual, and is not necessarily physically configured as illustrated in the drawings. That is, a specific form of distribution and integration of each device is not limited to the illustrated form, and all or a part thereof can be functionally or physically distributed and integrated in an arbitrary unit according to various loads, usage conditions, and the like.

In addition, the above-described embodiments can be appropriately combined in a region in which the processing contents do not contradict each other. Furthermore, the order of each step illustrated in the flowchart of the above-described embodiment can be appropriately changed.

Furthermore, for example, the present embodiment can be implemented as any configuration constituting an device or a system, for example, a processor as a system large scale integration (LSI) or the like, a module using a plurality of processors or the like, a unit using a plurality of modules or the like, a set obtained by further adding other functions to a unit, or the like (that is, a configuration of a part of the device).

Note that, in the present embodiment, the system means a set of a plurality of components (devices, modules (parts), and the like), and it does not matter whether all the components are in the same housing. Therefore, a plurality of devices housed in separate housings and connected via a network and one device in which a plurality of modules is housed in one housing are both systems.

Furthermore, for example, the present embodiment can adopt a configuration of cloud computing in which one function is shared and processed by a plurality of devices in cooperation via a network.

### <<8. Conclusion>>

As described above, according to an embodiment of the present disclosure, the terminal device 40 acquires necessary information necessary for switching the connection destination ground station 20 in advance before the switching processing, and switches the connection destination ground station based on the necessary information. Therefore, since the switching of the ground station 20 is smoothly executed, the communication system 1 can realize high communication performance.

Although the embodiments of the present disclosure have been described above, the technical scope of the present disclosure is not limited to the above-described embodiments as it is, and various modifications can be made without departing from the gist of the present disclosure. In addition, components of different embodiments and modifications may be appropriately combined.

Furthermore, the effects of each embodiment described in the present specification are merely examples and are not limited, and other effects may be provided.

Note that the present technology can also have the following configurations.
(1) A communication device that connects to at least one of a plurality of ground stations via a non-geostationary satellite, the communication device comprising:
   an acquisition unit that acquires predetermined information necessary for switching a connection destination ground station in advance before switching processing; and
   a communication control unit that switches the connection destination ground station based on the predetermined information.
(2) The communication device according to (1), wherein
   the predetermined information includes information related to switching used at the time of the switching processing, and
   the communication control unit switches the connection destination ground station based on the information related to the switching.
(3) The communication device according to (2), wherein
   the information related to the switching includes group identification information common to a plurality of communication devices connected to the non-geostationary satellite, and
   the communication control unit switches the connection destination ground station based on information common to a plurality of communication devices obtained using the group identification information.
(4) The communication device according to (2) or (3), wherein
   the information related to the switching includes information related to a communication stop during switching of the ground station, and
   the communication control unit stops communication during switching of the ground station based on the information related to the communication stop.
(5) The communication device according to any one of (1) to (4), wherein
   the predetermined information includes information related to a communication parameter used when communicating with a switching destination ground station via the non-geostationary satellite, and
   the communication control unit communicates with the switching destination ground station based on the information related to the communication parameter.
(6) The communication device according to (5), wherein
   the information related to the communication parameter includes information related to a timing advance at the time of communicating with the switching destination ground station via the non-geostationary satellite, and
   the communication control unit communicates with the switching destination ground station based on the information related to the timing advance.
(7) The communication device according to (5) or (6), wherein
   the information related to the communication parameter includes information related to transmission timing synchronization when communicating with the switching destination ground station via the non-geostationary satellite, and
   the communication control unit communicates with the switching destination ground station based on the information related to the transmission timing synchronization.
(8) The communication device according to any one of (5) to (7), wherein
   the information related to the communication parameter includes a terminal unique ID for communicating with the switching destination ground station, and
   the communication control unit communicates with the switching destination ground station based on the terminal unique ID.
(9) The communication device according to any one of (1) to (8), wherein
   the predetermined information includes information related to a random access procedure for connecting to a switching destination base station, and
   the communication control unit performs random access to the switching destination ground station based on the information related to the random access procedure when switching to the switching destination base station fails.
(10) The communication device according to any one of (1) to (9), wherein
   the predetermined information is information notification of which is semi-statically given during or after an initial connection to at least one of the plurality of ground stations.
(11) The communication device according to (10), wherein
   the information notification of which is semi-statically given includes a plurality of pieces of configuration information corresponding to each of two or more ground stations, and
   the communication control unit communicates with a switching source ground station using one of the plurality of pieces of configuration information, and switches the configuration information to be used to other configuration information corresponding to the switching destination ground station in a case where a notification of switching of the configuration information is given from the non-geostationary satellite or the switching source ground station.
(12) The communication device according to (11), wherein
   the notification of the switching is a dynamic notification from the non-geostationary satellite or the switching source ground station.
(13) The communication device according to any one of (10) to (12), wherein
   the information notification of which is semi-statically given includes a plurality of pieces of configuration information corresponding to each of two or more ground stations, and
   the communication control unit communicates with a switching source ground station using one of the plurality of pieces of configuration information, and switches the configuration information to be used to other configuration information corresponding to the switching destination ground station based on a trigger notification of which is given in advance.
(14) The communication device according to (13), wherein
   the trigger is time information, and
   the communication control unit switches the configuration information to be used to the other configuration information based on time information.
(15) The communication device according to any one of (1) to (14), wherein
   the predetermined information includes information related to a propagation distance to a switching destination ground station, and
   the communication control unit does not transmit data for a predetermined period at the time of switching the ground station based on the information related to the propagation distance.
(16) A non-geostationary satellite comprising:
   a transmission unit configured to transmit, to a communication device that connects to at least one of a plurality of ground stations via a non-geostationary satellite, predetermined information necessary for switching a connection destination ground station in advance before switching processing; and
   a communication control unit that relays communication between the communication device and a switching destination ground station performed using the predetermined information.
(17) A ground station comprising:
   a communication control unit that communicates with a communication device that connects to at least one of a plurality of ground stations via a non-geostationary satellite; and
   a transmission unit that transmits predetermined information necessary for switching a connection destination ground station to the communication device in advance before switching processing.
(18) A communication method executed by a communication device that communicates with at least one of a plurality of ground stations via a non-geostationary satellite, the communication method comprising:
   acquiring predetermined information necessary for switching a connection destination ground station in advance before switching processing; and
   switching the connection destination ground station based on the predetermined information.
(19) A communication method executed by a non-geostationary satellite, the communication method comprising:
   transmitting, to a communication device connected to at least one of a plurality of ground stations via a non-geostationary satellite, predetermined information necessary for switching a ground station as a connection destination in advance before switching processing; and
   relays communication between the communication device and a switching destination ground station performed using the predetermined information.
(20) A communication method executed by a ground station, the communication method comprising:
   communicating with a communication device that connects to at least one of a plurality of ground stations via a non-geostationary satellite; and
   transmitting predetermined information necessary for switching a connection destination ground station to the communication device in advance before switching processing.

### Reference Signs List

1 COMMUNICATION SYSTEM
10 MANAGEMENT DEVICE
20 GROUND STATION
30, 50 SATELLITE STATION
40 TERMINAL DEVICE
60 BASE STATION
70 AIRCRAFT STATION
11 COMMUNICATION UNIT
21, 31, 41 WIRELESS COMMUNICATION UNIT
12, 22, 32, 42 STORAGE UNIT
13, 23, 33, 43 CONTROL UNIT
211, 311, 411 RECEPTION PROCESSING UNIT
212, 312, 412 TRANSMISSION PROCESSING UNIT
213, 313, 413 ANTENNA UNIT
231, 331, 431 ACQUISITION UNIT
232, 332, 432 RECEPTION UNIT
233, 333, 433 TRANSMISSION UNIT
234, 334, 434 COMMUNICATION CONTROL UNIT

## Claims

1. A communication device that connects to at least one of a plurality of ground stations via a non-geostationary satellite, the communication device comprising:
an acquisition unit that acquires predetermined information necessary for switching a connection destination ground station in advance before switching processing; and
a communication control unit that switches the connection destination ground station based on the predetermined information.

2. The communication device according to claim 1, wherein
the predetermined information includes information related to switching used at the time of the switching processing, and
the communication control unit switches the connection destination ground station based on the information related to the switching.

3. The communication device according to claim 2, wherein
the information related to the switching includes group identification information common to a plurality of communication devices connected to the non-geostationary satellite, and
the communication control unit switches the connection destination ground station based on information common to a plurality of communication devices obtained using the group identification information.

4. The communication device according to claim 2, wherein
the information related to the switching includes information related to a communication stop during switching of the ground station, and
the communication control unit stops communication during switching of the ground station based on the information related to the communication stop.

5. The communication device according to claim 1, wherein
the predetermined information includes information related to a communication parameter used when communicating with a switching destination ground station via the non-geostationary satellite, and
the communication control unit communicates with the switching destination ground station based on the information related to the communication parameter.

6. The communication device according to claim 5, wherein
the information related to the communication parameter includes information related to a timing advance at the time of communicating with the switching destination ground station via the non-geostationary satellite, and
the communication control unit communicates with the switching destination ground station based on the information related to the timing advance.

7. The communication device according to claim 5, wherein
the information related to the communication parameter includes information related to transmission timing synchronization when communicating with the switching destination ground station via the non-geostationary satellite, and
the communication control unit communicates with the switching destination ground station based on the information related to the transmission timing synchronization.

8. The communication device according to claim 5, wherein
the information related to the communication parameter includes a terminal unique ID for communicating with the switching destination ground station, and
the communication control unit communicates with the switching destination ground station based on the terminal unique ID.

9. The communication device according to claim 1, wherein
the predetermined information includes information related to a random access procedure for connecting to a switching destination base station, and
the communication control unit performs random access to the switching destination ground station based on the information related to the random access procedure when switching to the switching destination base station fails.

10. The communication device according to claim 1, wherein
the predetermined information is information notification of which is semi-statically given during or after an initial connection to at least one of the plurality of ground stations.

11. The communication device according to claim 10, wherein
the information notification of which is semi-statically given includes a plurality of pieces of configuration information corresponding to each of two or more ground stations, and
the communication control unit communicates with a switching source ground station using one of the plurality of pieces of configuration information, and switches the configuration information to be used to other configuration information corresponding to the switching destination ground station in a case where a notification of switching of the configuration information is given from the non-geostationary satellite or the switching source ground station.

12. The communication device according to claim 11, wherein
the notification of the switching is a dynamic notification from the non-geostationary satellite or the switching source ground station.

13. The communication device according to claim 10, wherein
the information notification of which is semi-statically given includes a plurality of pieces of configuration information corresponding to each of two or more ground stations, and
the communication control unit communicates with a switching source ground station using one of the plurality of pieces of configuration information, and switches the configuration information to be used to other configuration information corresponding to the switching destination ground station based on a trigger notification of which is given in advance.

14. The communication device according to claim 13, wherein
the trigger is time information, and
the communication control unit switches the configuration information to be used to the other configuration information based on time information.

15. The communication device according to claim 1, wherein
the predetermined information includes information related to a propagation distance to a switching destination ground station, and
the communication control unit does not transmit data for a predetermined period at the time of switching the ground station based on the information related to the propagation distance.

16. A non-geostationary satellite comprising:
a transmission unit configured to transmit, to a communication device that connects to at least one of a plurality of ground stations via a non-geostationary satellite, predetermined information necessary for switching a connection destination ground station in advance before switching processing; and
a communication control unit that relays communication between the communication device and a switching destination ground station performed using the predetermined information.

17. A ground station comprising:
a communication control unit that communicates with a communication device that connects to at least one of a plurality of ground stations via a non-geostationary satellite; and
a transmission unit that transmits predetermined information necessary for switching a connection destination ground station to the communication device in advance before switching processing.

18. A communication method executed by a communication device that communicates with at least one of a plurality of ground stations via a non-geostationary satellite, the communication method comprising:
acquiring predetermined information necessary for switching a connection destination ground station in advance before switching processing; and
switching the connection destination ground station based on the predetermined information.

19. A communication method executed by a non-geostationary satellite, the communication method comprising:
transmitting, to a communication device connected to at least one of a plurality of ground stations via a non-geostationary satellite, predetermined information necessary for switching a ground station as a connection destination in advance before switching processing; and
relays communication between the communication device and a switching destination ground station performed using the predetermined information.

20. A communication method executed by a ground station, the communication method comprising:
communicating with a communication device that connects to at least one of a plurality of ground stations via a non-geostationary satellite; and
transmitting predetermined information necessary for switching a connection destination ground station to the communication device in advance before switching processing.
